# EUROPEAN PATENT APPLICATION

(11) **EP 4 770 256 A1**
(43) Date of publication of application: **01.07.2026**
(21) Application number: 23955721.8
(22) Date of filing: 18.10.2023
(51) Int. Cl.: H04W 74/08, H04W 4/021

(54) **WIRELESS COMMUNICATION METHODS, TERMINAL DEVICES AND NETWORK DEVICES**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); LIN, Xue, Dongguan, Guangdong 523860 (CN)
(74) Representative: Grassi, Stefano
(86) International application number: PCT/CN2023/125291
(87) International publication number: WO 2025/081394

(57) **Abstract**

A method for wireless communication, a terminal device and a network device are provided. The method comprises: the terminal device transmits first information to the network device, where the first information is used to indicate one or more models, the model description information and/or model data associated with each of the one or more models satisfies the one or more constraints contained in the auxiliary information provided by the network device; and/or the first information is used to indicate whether the terminal device has model(s) for implementing one or more model functions, and the terminal device determines whether the terminal device has the model(s) for implementing one or more model functions based on the one or more constraints contained in the auxiliary information provided by the network device. This helps to avoid the terminal device providing invalid model information to the network device, saves the overhead of information reporting by the terminal device, and also prevents the network device from configuring the terminal device based on inapplicable model information, which would cause degradation of communication performance.

## Description

### TECHNICAL FIELD

The present disclosure relates to the field of communication technologies, and more specifically, to a method for wireless communication, a terminal device and a network device.

### BACKGROUND

For certain reasons, a network device needs to acquire model information of model(s) supported by a terminal device (for example, model information of artificial intelligence/machine learning (AI/ML) models). For example, the network device needs to determine a communication mode with the terminal device based on the model information supported by the terminal device. Assuming that the network device determines, based on the model information supported by the terminal device, that the terminal device is deployed with a model for positioning, the network device may then indicate the terminal device to participate in a model-based positioning process. Assuming that the network device determines, based on the model information supported by the terminal device, that the terminal device is not deployed with a model for positioning, the network device may then indicate the terminal device to participate in a traditional positioning process (i.e., a non-model-based positioning process). Therefore, how to enable the network device to acquire the model information of the model(s) supported by the terminal device is an important technical direction.

### SUMMARY

The present disclosure provides a method for wireless communication, a terminal device and a network device. Various aspects involved in the present disclosure are described below.

A first aspect provides a method for wireless communication, including that a terminal device transmits first information to a network device, where the first information is used to indicate one or more models, and model description information and/or model data associated with each of the one or more models meets one or more constraints contained in auxiliary information provided by the network device; and/or the first information is used to indicate whether the terminal device has model(s) for implementing one or more model functions, and the terminal device determines whether the terminal device has the model(s) for implementing the one or more model functions based on the one or more constraints contained in the auxiliary information provided by the network device.

A second aspect provides a method for wireless communication, including that a network device receives first information transmitted by a terminal device, where the first information is used to indicate one or more models, and model description information and/or model data associated with each of the one or more models meets one or more constraints contained in auxiliary information provided by the network device; and/or the first information is used to indicate whether the terminal device has model(s) for implementing one or more model functions, and the terminal device determines whether the terminal device has the model(s) for implementing the one or more model functions based on the one or more constraints contained in the auxiliary information provided by the network device.

A third aspect provides a terminal device, including a transmitting unit configured to transmit first information to a network device, where the first information is used to indicate one or more models, and model description information and/or model data associated with each of the one or more models meets one or more constraints contained in auxiliary information provided by the network device; and/or the first information is used to indicate whether the terminal device has model(s) for implementing one or more model functions, and the terminal device determines whether the terminal device has the model(s) for implementing the one or more model functions based on the one or more constraints contained in the auxiliary information provided by the network device.

A fourth aspect provides a network device, including a receiving unit configured to receive first information transmitted by a terminal device, where the first information is used to indicate one or more models, and model description information and/or model data associated with each of the one or more models meets one or more constraints contained in auxiliary information provided by the network device; and/or the first information is used to indicate whether the terminal device has model(s) for implementing one or more model functions, and the terminal device determines whether the terminal device has the model(s) for implementing the one or more model functions based on the one or more constraints contained in the auxiliary information provided by the network device.

A fifth aspect provides a terminal device, including a processor, a memory, and a communication interface, where the memory is configured to store one or more computer programs, and the processor is configured to invoke the computer programs in the memory to cause the terminal device to perform part or all of the steps in the method according to the first aspect.

A sixth aspect provides a network device, including a processor, a memory, and a transceiver, where the memory is configured to store one or more computer programs, and the processor is configured to invoke the computer programs in the memory to cause the network device to perform part or all of the steps in the method according to the second aspect.

A seventh aspect provides a communication system according to an embodiment of the present disclosure, where the system includes the aforementioned terminal device and/or network device. In another possible design, the system may further include other devices that interact with the terminal device or the network device in the solutions provided by the embodiments of the present disclosure.

An eighth aspect provides a computer-readable storage medium according to an embodiment of the present disclosure, where the computer-readable storage medium stores a computer program, and the computer program causes a communication device (for example, a terminal device or a network device) to perform part or all of the steps in the methods according to the aforementioned aspects.

A ninth aspect provides a computer program product according to an embodiment of the present disclosure, where the computer program product includes a non-transitory computer-readable storage medium storing a computer program, and the computer program is operable to cause a communication device (for example, a terminal device or a network device) to perform part or all of the steps in the methods according to the aforementioned aspects. In some implementations, the computer program product may be a software installation package.

A tenth aspect provides a chip according to an embodiment of the present disclosure, where the chip includes a memory and a processor, and the processor may invoke and run a computer program from the memory to implement part or all of the steps described in the methods according to the aforementioned aspects.

In the embodiments of the present disclosure, the terminal device may indicate, through the first information, one or more models that meet the one or more constraints contained in the auxiliary information provided by the network device. In other words, the terminal device may provide the first information according to the actual requirements of the network device, which helps avoid the terminal device from providing invalid model information to the network device.

On the other hand, the terminal device may indicate, through the first information, one or more models that meet the one or more constraints contained in the auxiliary information provided by the network device. Correspondingly, the network device may manage the model(s) based on the first information, which helps avoid system performance loss or terminal device performance degradation caused by the network device blindly activating an inappropriate model(s). For example, if the network device blindly activates an inappropriate model, it may trigger connection re-establishment of the terminal device, resulting in unnecessary information interaction and reducing the performance of the communication system. For another example, if the network device blindly activates an inappropriate model, it may trigger an increase in the bit error rate of signal demodulation of the terminal device, leading to performance degradation of the terminal device.

### BRIEF DESCRIPTION OF THE DRAWINGS

FIG. 1 is a wireless communication system 100 to which an embodiment of the present disclosure is applied.
FIG. 2 is a schematic flowchart of a four-step random access procedure according to an embodiment of the present disclosure.
FIG. 3 is a schematic flowchart of a two-step random access procedure according to an embodiment of the present disclosure.
FIG. 4 is a schematic flowchart of a reconfiguration procedure applicable to an embodiment of the present disclosure.
FIG. 5 is a schematic flowchart of a method for wireless communication according to an embodiment of the present disclosure.
FIG. 6 is a schematic flowchart of transmitting auxiliary information according to an embodiment of the present disclosure.
FIG. 7 is a schematic flowchart of transmitting second indication information according to an embodiment of the present disclosure.
FIG. 8 is a schematic flowchart of transmitting second indication information according to another embodiment of the present disclosure.
FIG. 9 is a schematic diagram of a terminal device according to an embodiment of the present disclosure.
FIG. 10 is a schematic diagram of a network device according to an embodiment of the present disclosure.
FIG. 11 is a schematic structural diagram of a communication apparatus according to an embodiment of the present disclosure.

### DETAILED DESCRIPTION

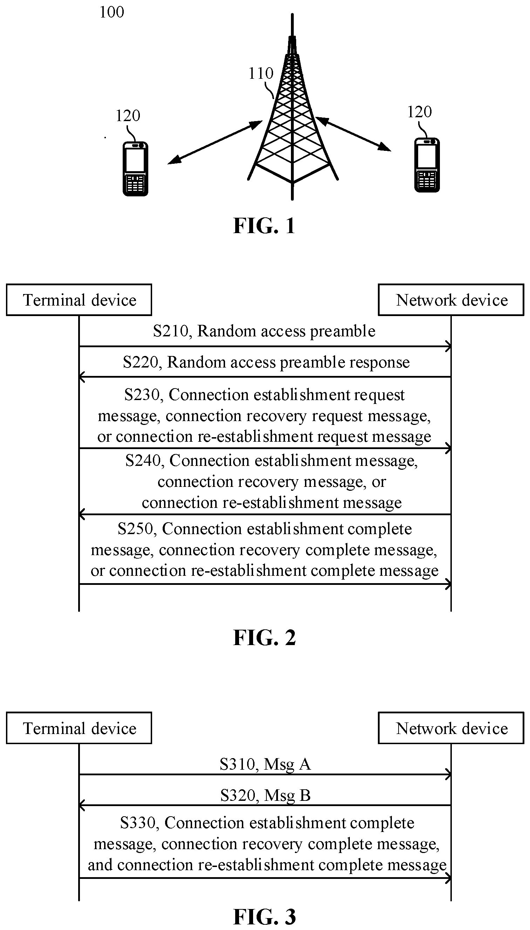

The technical solutions in the present disclosure will be described below with reference to the accompanying drawings. First, the communication system applicable to the embodiments of the present disclosure is described below with reference to FIG. 1.

FIG. 1 is a wireless communication system 100 to which an embodiment of the present disclosure is applied. The wireless communication system 100 may include a network device 110 and a terminal device 120. The network device 110 may be a device that communicates with the terminal device 120. The network device 110 may provide communication coverage for a specific geographic area and may communicate with terminal devices 120 located within the coverage area.

FIG. 1 exemplarily shows one network device and two terminals. Optionally, the wireless communication system 100 may include multiple network devices, and the coverage area of each network device may include other numbers of terminal devices, which is not limited in the embodiments of the present disclosure.

Optionally, the wireless communication system 100 may further include other network entities such as a network controller and a mobility management entity, which is not limited in the embodiments of the present disclosure.

It should be understood that the technical solutions of the embodiments of the present disclosure can be applied to various communication systems, such as a 5th generation (5G) system or new radio (NR), a long term evolution (LTE) system, an LTE frequency division duplex (FDD) system, an LTE time division duplex (TDD) system, etc. The technical solutions provided in the present disclosure can also be applied to future communication systems, such as a sixth- generation mobile communication system, a satellite communication system, etc.

The terminal device in the embodiments of the present disclosure may also be referred to as user equipment (UE), an access terminal, a subscriber unit, a subscriber station, a mobile station, a mobile terminal (MT), a remote station, a remote terminal, a mobile device, a user terminal, a terminal, a wireless communication device, a user agent, or a user apparatus. The terminal device in the embodiments of the present disclosure may be a device that provides voice and/or data connectivity to a user, and may be used to connect people, things, and machines, such as a handheld device with a wireless connection function, a vehicle-mounted device, etc. The terminal device in the embodiments of the present disclosure may be a mobile phone, a tablet computer (Pad), a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. Optionally, the UE may be used to act as a base station. For example, the UE may act as a scheduling entity that provides sidelink signals between UEs such as in vehicle-to-everything (V2X) or device-to-device (D2D) communication scenarios. For instance, cellular phones and vehicles communicate with each other using sidelink signals, and cellular phones communicate with smart home devices without relaying communication signals through a base station.

The network device in the embodiments of the present disclosure may be a device for communicating with a terminal device, and the network device may also be referred to as an access network device or a wireless access network device, for example, the network device may be a base station. The network device in the embodiments of the present disclosure may refer to a radio access network (RAN) node (or device) that connects a terminal device to a wireless network. A base station may broadly cover various names as follows, or be replaced with the following names, such as a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a baseband unit (BBU), a remote radio unit (RRU), an active antenna unit (AAU), a remote radio head (RRH), a central unit (CU), a distributed unit (DU), a positioning node, etc. A base station may be a macro base station, a micro base station, a relay node, a donor node, or the like, or a combination thereof. A base station may also refer to a communication module, a modem, or a chip disposed in the aforementioned devices or apparatuses. A base station may also be a mobile switching center, a device that undertakes a base station function in device-to-device (D2D), vehicle-to-everything (V2X), machine-to-machine (M2M) communication, a network-side device in a 6G network, a device that undertakes a base station function in a future communication system, etc. A base station may support networks using the same or different access technologies. The embodiments of the present disclosure do not limit the specific technologies and specific device forms adopted by the network device.

A base station may be fixed or mobile. For example, a helicopter or an unmanned aerial vehicle (UAV) may be configured to act as a mobile base station, and one or more cells may move according to the position of the mobile base station. In other examples, a helicopter or a UAV may be configured to serve as a device that communicates with another base station.

In some deployments, the network device in the embodiments of the present disclosure may refer to a CU or a DU, or the network device includes a CU and a DU. A gNB may further include an AAU.

The network device and the terminal device may be deployed on land, including indoors or outdoors, handheld or vehicle-mounted; they may also be deployed on water surfaces; and they may also be deployed on aircraft, balloons, and satellites in the air. The embodiments of the present disclosure do not limit the scenarios where the network device and the terminal device are located.

It should be understood that all or part of the functions of the communication device in the present disclosure may also be implemented by software functions running on hardware, or by virtualized functions instantiated on a platform (for example, a cloud platform).

To facilitate understanding, the communication procedures applicable to the embodiments of the present disclosure are described below with reference to FIGS. 2 to 4.

### Function Configuration Procedure

Currently, a communication system (for example, a 5G communication system) can provide many functions, some of which are mandatory functions for a terminal, and some of which are optional functions for a terminal. In some implementations, the terminal may indicate supported optional functions to the network device through a capability reporting procedure. Correspondingly, the network device may configure appropriate configuration information for the terminal device based on the capabilities reported by the terminal and the functions supported by the network device itself.

### Connection Establishment Procedure

Currently, in a communication system (for example, a 5G communication system), the procedure for a terminal device to establish a connection with a serving cell can be subdivided into three procedures: a connection establishment procedure, a connection restoration procedure, and a connection re-establishment procedure. Each procedure can be divided into two cases according to the random access mode: a procedure based on a two-step random access procedure and a procedure based on a four-step random access procedure.

FIG. 2 is a schematic flowchart of a four-step random access procedure according to an embodiment of the present disclosure. The method shown in FIG. 2 includes operations S210 to S250.

In operation S210, a terminal device transmits a random access preamble to a network device.

In operation S220, the network device transmits a random access preamble response to the terminal device.

In operation S230, the terminal device transmits one of a connection establishment request message, a connection resume request message, or a connection re-establishment request message to the network device.

In operation S240, if the network device receives the connection establishment request message, the network device transmits a connection establishment message to the terminal device; if the network device receives the connection resume request message, the network device transmits a connection restoration message to the terminal device; if the network device receives the connection re-establishment request message, the network device transmits a connection re-establishment message to the terminal device.

It should be noted that FIG. 2 only exemplarily describes the information interaction process. The process interaction applicable to the embodiments of the present disclosure is not limited thereto. For example, after the network device receives a re-establishment request message, the network device may transmit a connection rejection message or a connection establishment message, where the scenario where the network device transmits a connection establishment message to the terminal device is also referred to as a "re-establishment fallback scenario".

In operation S250, if the terminal device receives the connection establishment message, the terminal device transmits a connection establishment complete message to the network device; if the terminal device receives the connection restoration message, the terminal device transmits a connection resume complete message to the network device; if the terminal device receives the connection re-establishment message, the terminal device transmits a connection re-establishment complete message to the network device.

It should be noted that the aforementioned scenario where the terminal device receives the connection establishment message can be applied to the re-establishment fallback scenario described above, that is, after receiving the re-establishment request message, the network device transmits the connection establishment message to the terminal device.

FIG. 3 is a schematic flowchart of a two-step random access procedure according to an embodiment of the present disclosure. The method shown in FIG. 3 includes operations S310 to S330.

In operation S310, a terminal device transmits a message A (Msg A) to a network device.

In operation S320, the network device transmits a message B (Msg B) to the terminal device.

In operation S330, the terminal device transmits one of a connection establishment complete message, a connection resume complete message, and a connection re-establishment complete message to the network device.

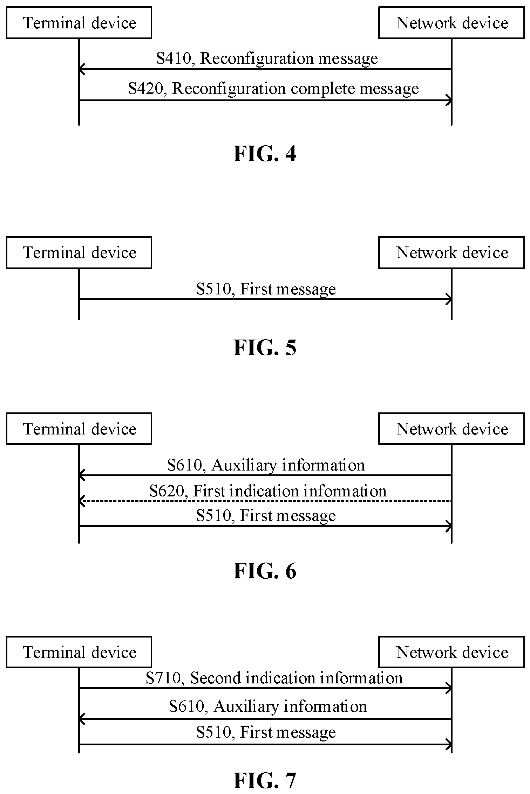

FIG. 4 is a schematic flowchart of a reconfiguration procedure applicable to an embodiment of the present disclosure. The method shown in FIG. 4 includes operations S410 to S420.

In operation S410, a network device transmits a reconfiguration message (also referred to as a "radio resource control (RRC) reconfiguration message") to a terminal device.

In operation S420, the terminal device transmits a reconfiguration complete message (also referred to as an "RRC reconfiguration complete message") to the network device.

For certain reasons, a network device needs to acquire model information of model(s) supported by a terminal device. For example, the network device needs to determine a communication mode with the terminal device based on the model information supported by the terminal device. Assuming that the network device determines, based on the model information supported by the terminal device, that the terminal device is deployed with a model for positioning, the network device may then indicate the terminal device to participate in a model-based positioning process. Assuming that the network device determines, based on the model information supported by the terminal device, that the terminal device is not deployed with a model for positioning, the network device may then indicate the terminal device to participate in a traditional positioning process (i.e., a non-model-based positioning process).

In some scenarios, due to the complexity of communication conditions, the model(s) supported by the terminal device may only be applicable under some communication conditions and may not be applicable under other communication conditions. In other words, not all model(s) supported by the terminal device can be used for communication with the current network device. In this case, the network device is actually not concerned about the models that cannot be applied to the current communication environment of the network device.

For example, the models supported by the terminal device include model 1 and model 2, where model 1 is only applicable to the communication conditions of cell 1 and not applicable to the communication conditions of cell 2, and model 2 is not applicable to the communication conditions of cell 1 but applicable to the communication conditions of cell 2, where cell 1 belongs to network device 1 and cell 2 belongs to network device 2. At this time, if the terminal device communicates with network device 2, and the terminal device transmits the model information of model 1 and model 2 to the network device, since model 1 is not applicable to network device 2, reporting the model information of model 1 is unnecessary and will increase transmission overhead.

Therefore, to address the above problem, the embodiments of the present disclosure propose that the terminal device may only transmit the model information of the model(s) concerned (or interested in) by the network device to the network device. However, the models concerned by different network devices may be different, and the terminal device cannot know which model(s) are concerned by the network device.

Therefore, to address the above problem, auxiliary information is introduced in the embodiments of the present disclosure. In other words, the terminal device can determine the model(s) and/or model information concerned by the network device through the auxiliary information of the network device, and transmit the model information of the model(s) concerned by the network device to the network device. Compared with the terminal device transmitting the model information of all models supported by the terminal device to the network device, this helps reduce transmission overhead.

In some implementations, the auxiliary information is used to assist the terminal device in determining the model(s) concerned by the network device, where the auxiliary information may indicate the model(s) concerned by the network device through constraint information. For example, the one or more constraints are used to indicate the model(s) concerned by the network device. For another example, the one or more constraints are used to indicate the model description information of the model(s) concerned by the network device. For another example, the one or more constraints are used to indicate the applicable conditions of the model(s) concerned by the network device. For another example, the one or more constraints are used to indicate matching information associated with the model(s) concerned by the network device (for example, a first identifier and/or a first string described below), where the matching information is used to determine the applicability of the models.

As described above, the auxiliary information may indicate the models concerned by the network device and/or the applicable conditions of the models through constraint information. Therefore, the auxiliary information can also be understood as being used to filter out the model(s) concerned or required by the network device through constraint information.

In some implementations, the auxiliary information is used to assist the terminal device in determining whether one or more models supported by the terminal device are applicable to a serving cell. The serving cell is not limited in the embodiments of the present disclosure. For example, the serving cell may be understood as the current serving cell. For another example, the serving cell may be a target cell to which the terminal device is handed over during a cell handover process.

In some implementations, the auxiliary information is used to assist the terminal device in determining whether the usage conditions of the model(s) is(are) met. For example, the auxiliary information is used to assist the terminal device in determining whether the optimal usage condition of the model(s) is(are) met, which helps improve the probability of using the model(s) under the optimal usage condition to enhance communication performance.

In some implementations, the auxiliary information includes one or more of the following: a geographic area identifier that the model(s) need(s) to satisfy; a logical area identifier that the model(s) need(s) to satisfy; a scenario identifier that the model(s) need(s) to satisfy; configuration information that the model(s) need(s) to satisfy; a dataset identifier that the model(s) need(s) to satisfy; a first identifier; or a first string.

**Taking the auxiliary information including a geographic area identifier that the model(s) need(s) to satisfy as an example,** in some implementations, the geographic area identifier may be used to indicate the geographic location where the serving cell is located. The serving cell is not limited in the embodiments of the present disclosure. For example, the serving cell may be understood as the current serving cell. For another example, the serving cell may be a target cell to which the terminal device is handed over during a cell handover process.

In some scenarios, the model(s) may be associated with specific geographic area(s). For example, the model(s) supported by the terminal device may be trained using training data in a specific geographic area, and thus these model(s) can usually achieve good performance gains only in matching geographic area(s). Therefore, in the embodiments of the present disclosure, the geographic area identifier of the serving cell may be indicated through the auxiliary information to assist the terminal device in determining whether the supported model(s) are applicable, thereby reporting model information that meets the communication requirements of the network device.

In some implementations, if the geographic area identifier that the model(s) need(s) to satisfy as indicated by the auxiliary information matches the geographic area identifier associated with the model(s) supported by the terminal device, it indicates that the model(s) supported by the terminal device can be used in the corresponding cell. If the geographic area identifier that the model(s) need(s) to satisfy as indicated by the auxiliary information does not match the geographic area identifier associated with the models supported by the terminal device, it indicates that the model(s) supported by the terminal device are not suitable for use in the corresponding cell. Therefore, this matching process may also be referred to as a "model applicability matching process".

For example, for a beam prediction function, the terminal device is deployed with model A and model B, where the geographic area identifier associated with model A is ID A and the geographic area identifier associated with model B is ID B. If the geographic area identifier that the model(s) need(s) to satisfy as indicated in the auxiliary information includes ID B and does not include ID A, the terminal device may determine that model B meets the auxiliary information, i.e., model B is a model required by the network device.

In some implementations, the geographic area identifier that the model(s) need(s) to satisfy may be associated with model functions. In other words, the geographic area identifier that the model(s) need(s) to satisfy may be used to indicate the geographic area identifier that the models used to implement a certain model function and concerned by the network device need to satisfy. For example, the association between the geographic area identifier that the model(s) need(s) to satisfy and the model functions may include the association between the geographic area identifier that the model(s) need(s) to satisfy and model identifiers, where the model identifiers are associated with the model functions. Of course, in the embodiments of the present disclosure, the association between the geographic area identifier that the model(s) need(s) to satisfy and the model functions may include the direct association between the geographic area identifier that the model(s) need(s) to satisfy and the model functions.

In some implementations, the aforementioned geographic area identifier that the model(s) need(s) to satisfy may be associated with model identifiers. For example, the geographic area identifier that the model(s) need(s) to satisfy is associated with model identifiers. In other words, the geographic area identifier that the model(s) need(s) to satisfy may be configured at the granularity of model identifiers. For example, one model identifier is associated with one geographic area identifier that the model(s) need(s) to satisfy, and models associated with different model identifiers are associated with independent geographic area identifiers (i.e., one-to-one association). For another example, a group of model identifiers is associated with one geographic area identifier that the model(s) need(s) to satisfy, and models associated with different groups of model identifiers are associated with independent geographic area identifiers (i.e., many-to-one association). A group of model identifiers may include one or more model identifiers.

The mode of carrying the geographic area identifier that the model(s) need(s) to satisfy is not limited in the embodiments of the present disclosure. For example, the geographic area identifier that the model(s) need(s) to satisfy may occupy multiple information fields in the first information, where different information fields among the multiple information fields may be associated with one model identifier, and different information fields among the multiple information fields carry the geographic area identifier that the model(s) need(s) to satisfy and associated with the model identifier.

Assuming that the geographic area identifier that the model(s) need(s) to satisfy may occupy multiple information fields in the first information: information field 1 and information field 2, where information field 1 is associated with model identifier ID A, information field 2 is associated with model identifier ID B, information field 1 is used to carry the geographic area identifier that the model(s) need(s) to satisfy and associated with model identifier ID A, and information field 2 is used to carry the geographic area identifier that the model(s) need(s) to satisfy and associated with model identifier ID B.

For another example, the geographic area identifier that the model(s) need(s) to satisfy may occupy multiple information fields in the first information, where different information fields among the multiple information fields may be associated with a group of model identifiers, and different information fields among the multiple information fields carry the geographic area identifier that the model(s) need(s) to satisfy and associated with the group of model identifiers.

Assuming that the geographic area identifier that the model(s) need(s) to satisfy may occupy multiple information fields in the first information: information field 1 and information field 2, where information field 1 is associated with model identifier group 1, information field 2 is associated with model identifier group 2, information field 1 is used to carry the geographic area identifier that the model(s) need(s) to satisfy and associated with model identifier group 1, and information field 2 is used to carry the geographic area identifier that the model(s) need(s) to satisfy and associated with model identifier group 2.

In other implementations, the geographic area identifier that the model(s) need(s) to satisfy may be associated with model functions. For example, the geographic area identifier that the model(s) need(s) to satisfy is associated with model functions. In other words, the geographic area identifier that the model(s) need(s) to satisfy may be configured at the granularity of model functions. For example, one model function is associated with one geographic area identifier that the model(s) need(s) to satisfy, and models associated with different model functions are associated with independent geographic area identifiers (i.e., one-to-one association). For another example, a group of model functions is associated with one geographic area identifier that the model(s) need(s) to satisfy, and models associated with different groups of model functions are associated with independent geographic area identifiers (i.e., many-to-one association). A group of model functions may include one or more model functions.

The mode of carrying the geographic area identifier that the model(s) need(s) to satisfy is not limited in the embodiments of the present disclosure. For example, the geographic area identifier that the model(s) need(s) to satisfy may occupy multiple information fields in the first information, where different information fields among the multiple information fields may be associated with one model function, and different information fields among the multiple information fields carry the geographic area identifier that the model(s) need(s) to satisfy and associated with the model function.

Assuming that the geographic area identifier that the model(s) need(s) to satisfy may occupy multiple information fields in the first information: information field 1 and information field 2, where information field 1 is associated with model function A, information field 2 is associated with model function B, information field 1 is used to carry the geographic area identifier that the model(s) need(s) to satisfy and associated with model function A, and information field 2 is used to carry the geographic area identifier that the model(s) need(s) to satisfy and associated with model function B.

For another example, the geographic area identifier that the model(s) need(s) to satisfy may occupy multiple information fields in the first information, where different information fields among the multiple information fields may be associated with a group of model functions, and different information fields among the multiple information fields carry the geographic area identifier that the model(s) need(s) to satisfy and associated with the group of model functions.

Assuming that the geographic area identifier that the model(s) need(s) to satisfy may occupy multiple information fields in the first information: information field 1 and information field 2, where information field 1 is associated with model function group 1, information field 2 is associated with model function group 2, information field 1 is used to carry the geographic area identifier that the model(s) need(s) to satisfy and associated with model function group 1, and information field 2 is used to carry the geographic area identifier that the model(s) need(s) to satisfy and associated with model function group 2.

The solutions for associating the geographic area identifier that the model(s) need(s) to satisfy with model identifiers or model functions in the embodiments of the present disclosure are described above. In the embodiments of the present disclosure, the geographic area identifier that the model(s) need(s) to satisfy may not be associated with model identifiers or model functions, in which case the geographic area identifier that the model(s) need(s) to satisfy may be understood as general information applicable to the matching of any relevant models.

In some implementations, if the models supported by the terminal device have associated geographic area identifiers, matching may be performed between the geographic area identifier that the model(s) need(s) to satisfy as indicated by the auxiliary information and the geographic area identifiers of the models supported by the terminal device. If the matching fails, the corresponding models supported by the terminal device are not applicable in the corresponding cell. If the matching succeeds, the corresponding models supported by the terminal device are applicable in the corresponding cell.

In some scenarios, if the model(s) supported by the terminal device do(es) not have associated geographic area identifiers, the geographic area identifier that the model(s) need(s) to satisfy as indicated by the auxiliary information may not be used for the matching operation.

In some implementations, the aforementioned geographic area identifier that the model(s) need(s) to satisfy may be a logical identifier of a geographic area. Since the geographic area identifier that the model(s) need(s) to satisfy is used for information matching operations, the terminal device can perform information matching operations even without understanding the actual geographic coordinate information associated with the logical identifier. Therefore, the actual geographic coordinate information associated with the logical identifier does not need to be exposed to the terminal device, which helps reduce the potential security risk of directly exposing the geographic coordinate information of the cell.

Taking the auxiliary information including the logical area identifier that the model(s) need(s) to satisfy as an example, in some implementations, the logical area identifier includes one or more of the following: identity information of a Public Land Mobile Network (PLMN); identity information of a Closed Access Group (CAG); identity information of a Stand-Alone Non-Public Network (SNPN); Tracking Area Code (TAC) information; RAN Area Code (RANAC) information; dedicated identity information of the valid usage area of the model(s); and cell identity information.

In the embodiments of the present disclosure, the implementation manner of the cell identity is not limited. In some implementations, the cell identity information may be represented by a Cell Global Identity (CGI). In some implementations, the cell identity information may be represented by a cell index. In some implementations, the cell identity information may be represented by a combination of a Physical Cell Identity (PCI) and a frequency point. For example, the cell identity information may be expressed as Frequency Point 2 + PCI 1.

In some scenarios, a model may be associated with a specific logical area. For example, a model supported by a terminal device may be trained using training data from a specific logical area, and such models can usually achieve good performance gains only in matching logical areas. Therefore, in the embodiments of the present disclosure, the auxiliary information may be used to indicate the logical area identifier that the model(s) need(s) to satisfy, so as to assist the terminal device in determining whether the supported model(s) is(are) applicable to the corresponding cell, thereby reporting model information that meets the communication requirements of the network device.

In some implementations, if the logical area identifier that the model(s) need(s) to satisfy as indicated by the auxiliary information matches the logical area identifier associated with the model(s) supported by the terminal device, it indicates that the model(s) supported by the terminal device can be used in the corresponding cell. If the logical area identifier that the model(s) need(s) to satisfy as indicated by the auxiliary information does not match the logical area identifier associated with the model(s) supported by the terminal device, it indicates that the model(s) supported by the terminal device is(are) not applicable to the corresponding cell. Therefore, this matching process may also be referred to as a "model applicability matching process".

For example, for the beam prediction function, a terminal device is deployed with Model A and Model B, where the cell identifier associated with Model A is: Frequency Point 1 + PCI 1, and the cell identifier associated with Model B is: Frequency Point 2 + PCI 1. If the logical area identifier that the model(s) need(s) to satisfy as indicated in the auxiliary information includes Frequency Point 2 + PCI 1, the terminal device may determine that Model B meets the auxiliary information, that is, Model B is the model concerned or required by the network device.

In some implementations, the logical area identifier that the model(s) need(s) to satisfy may be associated with model function(s). In other words, the logical area identifier that the model(s) need(s) to satisfy may be used to indicate the logical area identifier that the model(s) for implementing a certain model function concerned by the network device need(s) to satisfy. For example, the association between the logical area identifier that the model(s) need(s) to satisfy and the model function may include the association between the logical area identifier that the model(s) need(s) to satisfy and the model identifier, where the model identifier is associated with the model function. Of course, in the embodiments of the present disclosure, the association between the logical area identifier that the model(s) need(s) to satisfy and the model function may include the direct association between the logical area identifier that the model(s) need(s) to satisfy and the model function.

In some implementations, the aforementioned logical area identifier that the model(s) need(s) to satisfy may be associated with the model identifier. For example, the logical area identifier that the model(s) need(s) to satisfy is associated with the model identifier. In other words, the logical area identifier that the model(s) need(s) to satisfy may be configured at the granularity of the model identifier. For example, one model identifier is associated with one logical area identifier that the model(s) need(s) to satisfy, and models associated with different model identifiers are associated with independent logical area identifiers (i.e., one-to-one association). For another example, a group of model identifiers is associated with one logical area identifier that the model(s) need(s) to satisfy, and models associated with different groups of model identifiers are associated with one independent logical area identifier (i.e., many-to-one association). A group of model identifiers may include one or more model identifiers.

In the embodiments of the present disclosure, the mode of carrying the logical area identifier that the model(s) need(s) to satisfy is not limited. For example, the logical area identifier that the model(s) need(s) to satisfy may occupy multiple information fields in the first information, where different information fields among the multiple information fields may be associated with one model identifier, and different information fields among the multiple information fields carry the logical area identifier that the model(s) associated with the model identifier need to satisfy.

Assume that the logical area identifier that the model(s) need(s) to satisfy may occupy multiple information fields in the first information: Information Field 1 and Information Field 2, where Information Field 1 is associated with model identifier IDA, Information Field 2 is associated with model identifier IDB, Information Field 1 is used to carry the logical area identifier that the model(s) associated with model identifier IDA needs to satisfy, and Information Field 2 is used to carry the logical area identifier that the model(s) associated with model identifier IDB needs to satisfy.

For another example, the logical area identifier that the model(s) need(s) to satisfy may occupy multiple information fields in the first information, where different information fields among the multiple information fields may be associated with a group of model identifiers, and different information fields among the multiple information fields carry the logical area identifier that the model(s) associated with the group of model identifiers needs to satisfy.

Assume that the logical area identifier that the model(s) need(s) to satisfy may occupy multiple information fields in the first information: Information Field 1 and Information Field 2, where Information Field 1 is associated with model identifier group 1, Information Field 2 is associated with model identifier group 2, Information Field 1 is used to carry the logical area identifier that the model(s) associated with model identifier group 1 needs to satisfy, and Information Field 2 is used to carry the logical area identifier that the model(s) associated with model identifier group 2 needs to satisfy.

In other implementations, the logical area identifier that the model(s) need(s) to satisfy may be associated with model function(s). For example, the logical area identifier that the model(s) need(s) to satisfy is associated with the model function. In other words, the logical area identifier that the model(s) need(s) to satisfy may be configured at the granularity of the model function. For example, one model function is associated with one logical area identifier that the model(s) need(s) to satisfy, and a model associated with a different model function is associated with one independent logical area identifier (i.e., one-to-one association). For another example, a group of model functions is associated with one logical area identifier that the model(s) need(s) to satisfy, and models associated with different groups of model functions are associated with one independent logical area identifier (i.e., many-to-one association). A group of model functions may include one or more model functions.

In the embodiments of the present disclosure, the mode of carrying the logical area identifier that the model(s) need(s) to satisfy is not limited. For example, the logical area identifier that the model(s) need(s) to satisfy may occupy multiple information fields in the first information, where different information fields among the multiple information fields may be associated with one model function, and different information fields among the multiple information fields carry the logical area identifier that the model(s) associated with the model function need to satisfy.

Assume that the logical area identifier that the model(s) need(s) to satisfy may occupy multiple information fields in the first information: Information Field 1 and Information Field 2, where Information Field 1 is associated with model function A, Information Field 2 is associated with model function B, Information Field 1 is used to carry the logical area identifier that the model associated with model function A needs to satisfy, and Information Field 2 is used to carry the logical area identifier that the model associated with model function B needs to satisfy.

For another example, the logical area identifier that the model(s) need(s) to satisfy may occupy multiple information fields in the first information, where different information fields among the multiple information fields may be associated with a group of model functions, and different information fields among the multiple information fields carry the logical area identifier that the model(s) associated with the group of model functions needs to satisfy.

Assume that the logical area identifier that the model(s) need(s) to satisfy may occupy multiple information fields in the first information: Information Field 1 and Information Field 2, where Information Field 1 is associated with model function group 1, Information Field 2 is associated with model function group 2, Information Field 1 is used to carry the logical area identifier that the model(s) associated with model function group 1 needs to satisfy, and Information Field 2 is used to carry the logical area identifier that the model(s) associated with model function group 2 needs to satisfy.

The solutions for associating the logical area identifier that the model(s) need(s) to satisfy with the model identifier or model function in the embodiments of the present disclosure are described above. In the embodiments of the present disclosure, the logical area identifier that the model(s) need(s) to satisfy may not be associated with the model identifier or model function, in which case the logical area identifier that the model(s) need(s) to satisfy may be understood as general information applicable to the matching of any relevant models.

In some implementations, if the model(s) supported by the terminal device has(have) an associated logical area identifier, matching may be performed between the logical area identifier that the model(s) need(s) to satisfy as indicated by the auxiliary information and the logical area identifier of the model(s) supported by the terminal device. If the matching fails, the corresponding model supported by the terminal device is not applicable to the corresponding cell. If the matching succeeds, the corresponding model supported by the terminal device is applicable to the corresponding cell.

In some scenarios, if the model(s) supported by the terminal device does not have an associated logical area identifier, the logical area identifier that the model(s) need(s) to satisfy as indicated by the auxiliary information may not be used for the matching operation.

**Taking the auxiliary information including the scenario identifier that the model(s) need(s) to satisfy as an example,** in some implementations, the scenario identifier is used to indicate one or more of the following: Indoor Hotspot (InH); Indoor Factory (InF); Urban Macro (UMa); Urban Micro (UMi); and Rural Macro (RMa).

In some implementations, the aforementioned scenario identifier may be used to indicate the base station deployment scenario or channel model scenario associated with the serving cell. In the embodiments of the present disclosure, the serving cell is not limited. For example, the serving cell may be understood as the current serving cell. For another example, the serving cell may be the target cell to which the terminal device hands over during a cell handover process.

In some implementations, one scenario identifier may be associated with one or more cells. Generally speaking, the signal reflection paths, object-obstructed channels, and other conditions vary in different scenarios, leading to differences in the channel models corresponding to cells in different scenarios. Correspondingly, models trained based on channel models usually have significant differences. Therefore, in the embodiments of the present disclosure, the auxiliary information may be used to indicate the scenario identifier that the model(s) need(s) to satisfy, so as to assist the terminal device in determining whether the supported model is applicable, thereby reporting model information that meets the communication requirements of the network device.

In some implementations, if the scenario identifier that the model(s) need(s) to satisfy as indicated by the auxiliary information matches the scenario identifier associated with the model(s) supported by the terminal device, it indicates that the model(s) supported by the terminal device is(are) applicable to the corresponding cell. If the scenario identifier that the model(s) need(s) to satisfy as indicated by the auxiliary information does not match the scenario identifier associated with the model(s) supported by the terminal device, it indicates that the model(s) supported by the terminal device is(are) not applicable to the corresponding cell. Therefore, this matching process may also be referred to as a "model applicability matching process".

For example, for the beam prediction function, a terminal device is deployed with Model A and Model B, where the scenario identifier associated with Model A is InH, and the scenario identifier associated with Model B is UMa. If the scenario identifier that the model(s) need(s) to satisfy as indicated in the auxiliary information includes UMa and does not include InH, the terminal device may determine that Model B meets the auxiliary information, that is, Model B is the model concerned or required by the network device.

In some implementations, the scenario identifier that the model(s) need(s) to satisfy may be associated with model function(s). In other words, the scenario identifier that the model(s) need(s) to satisfy may be used to indicate the scenario identifier that the model(s) for implementing a certain model function concerned by the network device needs to satisfy. For example, the association between the scenario identifier that the model(s) need(s) to satisfy and the model function may include the association between the scenario identifier that the model(s) need(s) to satisfy and the model identifier, where the model identifier is associated with the model function. Of course, in the embodiments of the present disclosure, the association between the scenario identifier that the model(s) need(s) to satisfy and the model function may include the direct association between the scenario identifier that the model(s) need(s) to satisfy and the model function.

In some implementations, the aforementioned scenario identifier that the model(s) need(s) to satisfy may be associated with the model identifier. For example, the scenario identifier that the model(s) need(s) to satisfy is associated with the model identifier. In other words, the scenario identifier that the model(s) need(s) to satisfy may be configured at the granularity of the model identifier. For example, one model identifier is associated with one scenario identifier that the model(s) need(s) to satisfy, and models associated with different model identifiers are associated with independent scenario identifiers (i.e., one-to-one association). For another example, a group of model identifiers is associated with one scenario identifier that the model(s) need(s) to satisfy, and models associated with different groups of model identifiers are associated with one independent scenario identifier (i.e., many-to-one association). A group of model identifiers may include one or more model identifiers.

In the embodiments of the present disclosure, the mode of carrying the scenario identifier that the model(s) need(s) to satisfy is not limited. For example, the scenario identifier that the model(s) need(s) to satisfy may occupy multiple information fields in the first information, where different information fields among the multiple information fields may be associated with one model identifier, and different information fields among the multiple information fields carry the scenario identifier that the model(s) associated with the model identifier needs to satisfy.

Assume that the scenario identifier that the model(s) need(s) to satisfy may occupy multiple information fields in the first information: Information Field 1 and Information Field 2, where Information Field 1 is associated with model identifier IDA, Information Field 2 is associated with model identifier IDB, Information Field 1 is used to carry the scenario identifier that the model(s) associated with model identifier IDA needs to satisfy, and Information Field 2 is used to carry the scenario identifier that the model(s) associated with model identifier IDB needs to satisfy.

For another example, the scenario identifier that the model(s) need(s) to satisfy may occupy multiple information fields in the first information, where different information fields among the multiple information fields may be associated with a group of model identifiers, and different information fields among the multiple information fields carry the scenario identifier that the model(s) associated with the group of model identifiers needs to satisfy.

Assume that the scenario identifier that the model(s) need(s) to satisfy may occupy multiple information fields in the first information: Information Field 1 and Information Field 2, where Information Field 1 is associated with model identifier group 1, Information Field 2 is associated with model identifier group 2, Information Field 1 is used to carry the scenario identifier that the model(s) associated with model identifier group 1 needs to satisfy, and Information Field 2 is used to carry the scenario identifier that the model(s) associated with model identifier group 2 needs to satisfy.

In other implementations, the scenario identifier that the model(s) need(s) to satisfy may be associated with model function(s). For example, the scenario identifier that the model(s) need(s) to satisfy is associated with the model function. In other words, the scenario identifier that the model(s) need(s) to satisfy may be configured at the granularity of the model function. For example, one model function is associated with one scenario identifier that the model(s) need(s) to satisfy, and a model associated with a different model function is associated with one independent scenario identifier (i.e., one-to-one association). For another example, a group of model functions is associated with one scenario identifier that the model(s) need(s) to satisfy, and models associated with different groups of model functions are associated with one independent scenario identifier (i.e., many-to-one association). A group of model functions may include one or more model functions.

In the embodiments of the present disclosure, the mode of carrying the scenario identifier that the model(s) need(s) to satisfy is not limited. For example, the scenario identifier that the model(s) need(s) to satisfy may occupy multiple information fields in the first information, where different information fields among the multiple information fields may be associated with one model function, and different information fields among the multiple information fields carry the scenario identifier that the model(s) associated with the model function needs to satisfy.

Assume that the scenario identifier that the model(s) need(s) to satisfy may occupy multiple information fields in the first information: Information Field 1 and Information Field 2, where Information Field 1 is associated with model function A, Information Field 2 is associated with model function B, Information Field 1 is used to carry the scenario identifier that the model(s) associated with model function A needs to satisfy, and Information Field 2 is used to carry the scenario identifier that the model(s) associated with model function B needs to satisfy.

For another example, the scenario identifier that the model(s) need(s) to satisfy may occupy multiple information fields in the first information, where different information fields among the multiple information fields may be associated with a group of model functions, and different information fields among the multiple information fields carry the scenario identifier that the model(s) associated with the group of model functions needs to satisfy.

Assume that the scenario identifier that the model(s) need(s) to satisfy may occupy multiple information fields in the first information: Information Field 1 and Information Field 2, where Information Field 1 is associated with model function group 1, Information Field 2 is associated with model function group 2, Information Field 1 is used to carry the scenario identifier that the model(s) associated with model function group 1 needs to satisfy, and Information Field 2 is used to carry the scenario identifier that the model(s) associated with model function group 2 needs to satisfy.

The solutions for associating the scenario identifier that the model(s) need(s) to satisfy with the model identifier or model function in the embodiments of the present disclosure are described above. In the embodiments of the present disclosure, the scenario identifier that the model(s) need(s) to satisfy may not be associated with the model identifier or model function, in which case the scenario identifier that the model(s) need(s) to satisfy may be understood as general information applicable to the matching of any relevant models.

In some implementations, if the model(s) supported by the terminal device has an associated scenario identifier, matching may be performed between the scenario identifier that the model(s) need(s) to satisfy as indicated by the auxiliary information and the scenario identifier of the model(s) supported by the terminal device. If the matching fails, the corresponding model supported by the terminal device is not applicable to the corresponding cell. If the matching succeeds, the corresponding model supported by the terminal device is applicable to the corresponding cell.

In some scenarios, if the model(s) supported by the terminal device do(es) not have an associated scenario identifier, the scenario identifier that the model(s) need(s) to satisfy as indicated by the auxiliary information may not be used for the matching operation.

**Taking the auxiliary information including the configuration information that the model(s) need(s) to satisfy as an example,** the configuration information that the model(s) need(s) to satisfy includes measurement configuration information associated with the model(s) and/or public configuration information associated with the model(s).

In some scenarios, a model may be associated with configuration information, where the configuration information is used to indicate the corresponding cell configuration information during model training. Such models can usually achieve good performance gains only when the configuration information matches. Therefore, in the embodiments of the present disclosure, the auxiliary information may be used to indicate the configuration information of the serving cell, so as to assist the terminal device in determining whether the supported model is applicable, thereby reporting model information that meets the communication requirements of the network device.

In some implementations, if the configuration information that the model(s) need(s) to satisfy as indicated by the auxiliary information matches the configuration information associated with the model(s) supported by the terminal device, it indicates that the model(s) supported by the terminal device can be used in the corresponding cell. If the configuration information that the model(s) need(s) to satisfy as indicated by the auxiliary information does not match the configuration information associated with the model(s) supported by the terminal device, it indicates that the model(s) supported by the terminal device is not applicable to the corresponding cell. Therefore, this matching process may also be referred to as a "model applicability matching process".

For example, for the beam prediction function, a terminal device is deployed with Model A and Model B, where the configuration information associated with Model A is PRS Configuration 1, and the configuration information associated with Model B is PRS Configuration 2. If the configuration information that the model(s) need(s) to satisfy as indicated in the auxiliary information includes PRS Configuration 2 and does not include PRS Configuration 1, the terminal device may determine that Model B meets the auxiliary information, that is, Model B is the model concerned or required by the network device.

In some implementations, since some models are related to measurement processes, the aforementioned measurement configuration information associated with the model(s) may be understood as configuration information dedicated to measurement-related models. Correspondingly, the public configuration information associated with the model(s) may be understood as general configuration information of the model(s).

In some implementations, the measurement configuration information includes one or more of the following: Synchronization Signal/Physical Broadcast Channel Block (SS/PBCH Block, SSB) resource configuration information; Channel State Information Reference Signal (CSI-RS) resource configuration information; Sounding Reference Signal (SRS) resource configuration information; and Positioning Reference Signal (PRS) resource configuration information.

In the embodiments of the present disclosure, the aforementioned resource configuration information is not limited. For example, the aforementioned resource configuration information may be used to configure one or more of the following: time-domain resources, frequency-domain resources, and space-domain resources.

In some implementations, the public configuration information is used to configure frequency-domain resources associated with the model(s), and thus the public configuration information is also referred to as "frequency-domain resource configuration information". For example, the public configuration information may include one or more of the following: frequency point identity information, frequency band identity information, and frequency band combination identity information.

In some implementations, the configuration information that the model(s) need(s) to satisfy may be associated with model functions. In other words, the configuration information that the model(s) need(s) to satisfy may be used to indicate the configuration information that the model(s) for implementing a certain model function concerned by the network device needs to satisfy. For example, the association between the configuration information that the model(s) need(s) to satisfy and the model function may include the association between the configuration information that the model(s) need(s) to satisfy and the model identifier, where the model identifier is associated with the model function. Of course, in the embodiments of the present disclosure, the association between the configuration information that the model(s) need(s) to satisfy and the model function may include the direct association between the configuration information that the model(s) need(s) to satisfy and the model function.

In some implementations, the aforementioned configuration information that the model(s) need(s) to satisfy may be associated with the model identifier. For example, the configuration information that the model(s) need(s) to satisfy is associated with the model identifier. In other words, the configuration information that the model(s) need(s) to satisfy may be configured at the granularity of the model identifier. For example, one model identifier is associated with one configuration information that the model(s) need(s) to satisfy, and a model associated with a different model identifier is associated with one independent configuration information (i.e., one-to-one association). For another example, a group of model identifiers is associated with one configuration information that the model(s) need(s) to satisfy, and models associated with different groups of model identifiers are associated with one independent configuration information (i.e., many-to-one association). A group of model identifiers may include one or more model identifiers.

In the embodiments of the present disclosure, the mode of carrying the configuration information that the model(s) need(s) to satisfy is not limited. For example, the configuration information that the model(s) need(s) to satisfy may occupy multiple information fields in the first information, where different information fields among the multiple information fields may be associated with one model identifier, and different information fields among the multiple information fields carry the configuration information that the model(s) associated with the model identifier needs to satisfy.

Assume that the configuration information that the model(s) need(s) to satisfy may occupy multiple information fields in the first information: Information Field 1 and Information Field 2, where Information Field 1 is associated with model identifier IDA, Information Field 2 is associated with model identifier IDB, Information Field 1 is used to carry the configuration information that the model(s) associated with model identifier IDA needs to satisfy, and Information Field 2 is used to carry the configuration information that the model(s) associated with model identifier IDB needs to satisfy.

For another example, the configuration information that the model(s) need(s) to satisfy may occupy multiple information fields in the first information, where different information fields among the multiple information fields may be associated with a group of model identifiers, and different information fields among the multiple information fields carry the configuration information that the model(s) associated with the group of model identifiers need(s) to satisfy.

Assume that the configuration information that the model(s) need(s) to satisfy may occupy multiple information fields in the first information: Information Field 1 and Information Field 2, where Information Field 1 is associated with model identifier group 1, Information Field 2 is associated with model identifier group 2, Information Field 1 is used to carry the configuration information that the model(s) associated with model identifier group 1 needs to satisfy, and Information Field 2 is used to carry the configuration information that the model(s) associated with model identifier group 2 needs to satisfy.

In other implementations, the configuration information that the model(s) need(s) to satisfy may be associated with model functions. For example, the configuration information that the model(s) need(s) to satisfy is associated with the model function. In other words, the configuration information that the model(s) need(s) to satisfy may be configured at the granularity of the model function. For example, one model function is associated with one configuration information that the model(s) need(s) to satisfy, and a models associated with a different model function is associated with one independent configuration information (i.e., one-to-one association). For another example, a group of model functions is associated with one configuration information that the model(s) need(s) to satisfy, and models associated with different groups of model functions are associated with one independent configuration information (i.e., many-to-one association). A group of model functions may include one or more model functions.

In the embodiments of the present disclosure, the mode of carrying the configuration information that the model(s) need(s) to satisfy is not limited. For example, the configuration information that the model(s) need(s) to satisfy may occupy multiple information fields in the first information, where different information fields among the multiple information fields may be associated with one model function, and different information fields among the multiple information fields carry the configuration information that the model(s) associated with the model function needs to satisfy.

Assume that the configuration information that the model(s) need(s) to satisfy may occupy multiple information fields in the first information: Information Field 1 and Information Field 2, where Information Field 1 is associated with model function A, Information Field 2 is associated with model function B, Information Field 1 is used to carry the configuration information that the model(s) associated with model function A needs to satisfy, and Information Field 2 is used to carry the configuration information that the model(s) associated with model function B needs to satisfy.

For another example, the configuration information that the model(s) need(s) to satisfy may occupy multiple information fields in the first information, where different information fields among the multiple information fields may be associated with a group of model functions, and different information fields among the multiple information fields carry the configuration information that the model(s) associated with the group of model functions needs to satisfy.

Assume that the configuration information that the model(s) need(s) to satisfy may occupy multiple information fields in the first information: Information Field 1 and Information Field 2, where Information Field 1 is associated with model function group 1, Information Field 2 is associated with model function group 2, Information Field 1 is used to carry the configuration information that the model(s) associated with model function group 1 needs to satisfy, and Information Field 2 is used to carry the configuration information that the model(s) associated with model function group 2 needs to satisfy.

The solutions for associating the configuration information that the model(s) need(s) to satisfy with the model identifier or model function in the embodiments of the present disclosure are described above. In the embodiments of the present disclosure, the configuration information that the model(s) need(s) to satisfy may not be associated with the model identifier or model function, in which case the configuration information that the model(s) need(s) to satisfy may be understood as general information applicable to the matching of any relevant models.

In some implementations, if the model(s) supported by the terminal device has associated configuration information, matching may be performed between the configuration information that the model(s) need(s) to satisfy as indicated by the auxiliary information and the configuration information of the model(s) supported by the terminal device. If the matching fails, the corresponding model supported by the terminal device is not applicable to the corresponding cell. If the matching succeeds, the corresponding model supported by the terminal device is applicable to the corresponding cell.

In some scenarios, if the model(s) supported by the terminal device does not have associated configuration information, the configuration information that the model(s) need(s) to satisfy as indicated by the auxiliary information may not be used for the matching operation.

**Taking the auxiliary information including the dataset identifier that the model(s) need(s) to satisfy as an example,** in some implementations, the dataset identifier may be used to indicate the dataset corresponding to the serving cell. Generally, one dataset is associated with one model application environment and/or configuration. In the embodiments of the present disclosure, the serving cell is not limited. For example, the serving cell may be understood as the current serving cell. For another example, the serving cell may be the target cell to which the terminal device hands over during a cell handover process.

In some scenarios, a model may be associated with a specific dataset. For example, a model supported by a terminal device may be trained using a specific dataset, and such models can usually achieve good performance gains only in matching datasets. Therefore, in the embodiments of the present disclosure, the auxiliary information may be used to indicate the dataset identifier of the serving cell, so as to assist the terminal device in determining whether the supported model is applicable, thereby reporting models that meet the communication requirements of the network device.

In addition, in the embodiments of the present disclosure, indicating the dataset through the dataset identifier helps avoid exposing the characteristics of the dataset itself and improves the security of the dataset.

In some implementations, if the dataset identifier that the model(s) need(s) to satisfy as indicated by the auxiliary information matches the dataset identifier associated with the model(s) supported by the terminal device, it indicates that the corresponding model supported by the terminal device is applicable to the corresponding cell. If the dataset identifier that the model(s) need(s) to satisfy as indicated by the auxiliary information does not match the dataset identifier associated with the model(s) supported by the terminal device, it indicates that the corresponding model supported by the terminal device is not applicable to the corresponding cell.

For example, for the beam prediction function, a terminal device is deployed with Model A and Model B, where the dataset identifier associated with Model A is Dataset Identifier 1, and the dataset identifier associated with Model B is Dataset Identifier 2. If the dataset identifier that the model(s) need(s) to satisfy as indicated in the auxiliary information includes Dataset Identifier 2 and does not include Dataset Identifier 1, the terminal device may determine that Model B meets the auxiliary information, that is, Model B is the model concerned or required by the network device.

In some implementations, the dataset identifier that the model(s) need(s) to satisfy may be associated with model function(s). In other words, the dataset identifier that the model(s) need(s) to satisfy may be used to indicate the dataset identifier that the model(s) for implementing a certain model function concerned by the network device needs to satisfy. For example, the association between the dataset identifier that the model(s) need(s) to satisfy and the model function may include the association between the dataset identifier that the model(s) need(s) to satisfy and the model identifier, where the model identifier is associated with the model function. Of course, in the embodiments of the present disclosure, the association between the dataset identifier that the model(s) need(s) to satisfy and the model function may include the direct association between the dataset identifier that the model(s) need(s) to satisfy and the model function.

In some implementations, the aforementioned dataset identifier that the model(s) need(s) to satisfy may be associated with the model identifier. For example, the dataset identifier that the model(s) need(s) to satisfy is associated with the model identifier. In other words, the dataset identifier that the model(s) need(s) to satisfy may be configured at the granularity of the model identifier. For example, one model identifier is associated with one dataset identifier that the model(s) need(s) to satisfy, and a model associated with a different model identifier is associated with one independent dataset identifier (i.e., one-to-one association). For another example, a group of model identifiers is associated with one dataset identifier that the model(s) need(s) to satisfy, and models associated with different groups of model identifiers are associated with one independent dataset identifier (i.e., many-to-one association). A group of model identifiers may include one or more model identifiers.

In the embodiments of the present disclosure, the mode of carrying the dataset identifier that the model(s) need(s) to satisfy is not limited. For example, the dataset identifier that the model(s) need(s) to satisfy may occupy multiple information fields in the first information, where different information fields among the multiple information fields may be associated with one model identifier, and different information fields among the multiple information fields carry the dataset identifier that the model(s) associated with the model identifier needs to satisfy.

Assume that the dataset identifier that the model(s) need(s) to satisfy may occupy multiple information fields in the first information: Information Field 1 and Information Field 2, where Information Field 1 is associated with model identifier IDA, Information Field 2 is associated with model identifier IDB, Information Field 1 is used to carry the dataset identifier that the model(s) associated with model identifier IDA needs to satisfy, and Information Field 2 is used to carry the dataset identifier that the model(s) associated with model identifier IDB needs to satisfy.

For another example, the dataset identifier that the model(s) need(s) to satisfy may occupy multiple information fields in the first information, where different information fields among the multiple information fields may be associated with a group of model identifiers, and different information fields among the multiple information fields carry the dataset identifier that the model(s) associated with the group of model identifiers needs to satisfy.

Assume that the dataset identifier that the model(s) need(s) to satisfy may occupy multiple information fields in the first information: Information Field 1 and Information Field 2, where Information Field 1 is associated with model identifier group 1, Information Field 2 is associated with model identifier group 2, Information Field 1 is used to carry the dataset identifier that the model(s) associated with model identifier group 1 needs to satisfy, and Information Field 2 is used to carry the dataset identifier that the model(s) associated with model identifier group 2 needs to satisfy.

In other implementations, the dataset identifier that the model(s) need(s) to satisfy may be associated with model functions. For example, the dataset identifier that the model(s) need(s) to satisfy is associated with the model function. In other words, the dataset identifier that the model(s) need(s) to satisfy may be configured at the granularity of the model function. For example, one model function is associated with one dataset identifier that the model(s) need(s) to satisfy, and a model associated with a different model function is associated with one independent dataset identifier (i.e., one-to-one association). For another example, a group of model functions is associated with one dataset identifier that the model(s) need(s) to satisfy, and models associated with different groups of model functions are associated with one independent dataset identifier (i.e., many-to-one association). A group of model functions may include one or more model functions.

In the embodiments of the present disclosure, the mode of carrying the dataset identifier that the model(s) need(s) to satisfy is not limited. For example, the dataset identifier that the model(s) need(s) to satisfy may occupy multiple information fields in the first information, where different information fields among the multiple information fields may be associated with one model function, and different information fields among the multiple information fields carry the dataset identifier that the model(s) associated with the model function needs to satisfy.

Assume that the dataset identifier that the model(s) need(s) to satisfy may occupy multiple information fields in the first information: Information Field 1 and Information Field 2, where Information Field 1 is associated with model function A, Information Field 2 is associated with model function B, Information Field 1 is used to carry the dataset identifier that the model(s) associated with model function A needs to satisfy, and Information Field 2 is used to carry the dataset identifier that the model(s) associated with model function B needs to satisfy.

For another example, the dataset identifier that the model(s) need(s) to satisfy may occupy multiple information fields in the first information, where different information fields among the multiple information fields may be associated with a group of model functions, and different information fields among the multiple information fields carry the dataset identifier that the model(s) associated with the group of model functions needs to satisfy.

Assume that the dataset identifier that the model(s) need(s) to satisfy may occupy multiple information fields in the first information: Information Field 1 and Information Field 2, where Information Field 1 is associated with model function group 1, Information Field 2 is associated with model function group 2, Information Field 1 is used to carry the dataset identifier that the model(s) associated with model function group 1 needs to satisfy, and Information Field 2 is used to carry the dataset identifier that the model(s) associated with model function group 2 needs to satisfy.

The solutions for associating the dataset identifier that the model(s) need(s) to satisfy with the model identifier or model function in the embodiments of the present disclosure are described above. In the embodiments of the present disclosure, the dataset identifier that the model(s) need(s) to satisfy may not be associated with the model identifier or model function, in which case the dataset identifier that the model(s) need(s) to satisfy may be understood as general information applicable to the matching of any relevant models.

In some implementations, if the model(s) supported by the terminal device has(have) an associated dataset identifier, matching may be performed between the dataset identifier that the model(s) need(s) to satisfy as indicated by the auxiliary information and the dataset identifier of the model(s) supported by the terminal device. If the matching fails, the corresponding model supported by the terminal device is not applicable to the corresponding cell. If the matching succeeds, the corresponding model supported by the terminal device is applicable to the corresponding cell.

In some scenarios, if the model(s) supported by the terminal device do(es) not have an associated dataset identifier, the dataset identifier that the model(s) need(s) to satisfy as indicated by the auxiliary information may not be used for the matching operation.

Taking the auxiliary information including the first identifier as an example, in some implementation manners, the first identifier is used to indicate the constraint(s) or applicable condition(s) that the model(s) need(s) to meet. In other words, the first identifier is used to assist the terminal device in determining whether the supported model matches the model requirements concerned by the network device, or to assist the terminal device in determining whether the supported model is applicable in the corresponding cell.

In some implementation manners, the first identifier may be used to indicate one or more of the above-mentioned auxiliary information. For example, the first identifier may be used to indicate the dataset identifier that the model(s) need(s) to satisfy. For another example, the first identifier may be used to indicate the dataset identifier and the scenario identifier that the model(s) need(s) to satisfy. For yet another example, the first identifier may be used to indicate the dataset identifier, scenario identifier, logical area identifier, geographic area identifier, and configuration information that the model(s) need(s) to satisfy.

In the embodiments of the present disclosure, carrying the first identifier in the auxiliary information to assist the terminal device in determining whether the supported model is applicable in the corresponding cell helps reduce the overhead of transmitting auxiliary information.

On the other hand, since the first identifier is a logical identifier, the communication device cannot determine model-related information based on the first identifier, which helps improve the privacy of the model(s).

In some implementation manners, the second identifier is used to indicate the model description information (including, for example, model applicable conditions) and/or model data of the model(s) supported by the terminal device. If the first identifier that the model(s) need(s) to satisfy as indicated by the auxiliary information matches the second identifier associated with the model(s) supported by the terminal device, it indicates that the model(s) supported by the terminal device is(are applicable in the corresponding cell. If the first identifier that the model(s) need(s) to satisfy as indicated by the auxiliary information does not match the second identifier associated with the model(s) supported by the terminal device, it indicates that the model(s) supported by the terminal device is not applicable in the corresponding cell. Therefore, this matching process may also be referred to as the "model applicability matching process".

For example, for the beam prediction function, the terminal device is deployed with model A and model B, where the second identifier associated with model A is identifier 1, and the second identifier associated with model B is identifier 2. If the first identifier that the model(s) need(s) to satisfy as indicated in the auxiliary information includes identifier 2 but does not include identifier 1, the terminal device may determine that model B meets the auxiliary information, i.e., model B is the model(s) concerned or required by the network device.

In the embodiments of the present disclosure, the first identifier may be understood as a logical identifier. Through determining whether the model(s) supported by the terminal device is applicable based on the logical identifier, the model development process can be decoupled from the above-described model applicability matching process. In other words, during the model applicability matching process, matching can be performed directly based on the first identifier without concerning the meaning of the first identifier (such as relevant parameters of the model training process and communication conditions), which helps improve the flexibility of setting the first identifier.

In some implementation manners, the first identifier that the model(s) need(s) to satisfy may be associated with the model function. That is to say, the first identifier that the model(s) need(s) to satisfy may be used to indicate the first identifier that the model(s) for implementing a certain model function concerned by the network device needs to meet. For example, the association between the first identifier that the model(s) need(s) to satisfy and the model function may include the association between the first identifier that the model(s) need(s) to satisfy and the model identifier, where the model identifier is associated with the model function. Of course, in the embodiments of the present disclosure, the association between the first identifier that the model(s) need(s) to satisfy and the model function may include the direct association between the first identifier that the model(s) need(s) to satisfy and the model function.

In some implementation manners, the first identifier that the model(s) need(s) to satisfy may be associated with the model identifier. For example, the first identifier that the model(s) need(s) to satisfy is associated with the model identifier. In other words, the first identifier that the model(s) need(s) to satisfy may be configured on a per-model-identifier basis. For example, one model identifier is associated with one first identifier that the corresponding model(s) need(s) to satisfy, and a model associated with a different model identifier is associated with one independent first identifier (i.e., one-to-one association). For another example, a group of model identifiers is associated with one first identifier that the corresponding models need to meet, and models associated with different groups of model identifiers are associated with one independent first identifier (i.e., many-to-one association). A group of model identifiers may include one or more model identifiers.

In the embodiments of the present disclosure, there is no limitation on the manner of carrying the first identifier that the model(s) need(s) to satisfy. For example, the first identifier that the model(s) need(s) to satisfy may occupy multiple information fields in the first information, where different information fields among the multiple information fields may be associated with one model identifier, and different information fields among the multiple information fields carry the first identifier that the model(s) associated with the corresponding model identifier needs to meet.

Assume that the first identifier that the model(s) need(s) to satisfy may occupy two information fields in the first information: information field 1 and information field 2. Information field 1 is associated with model identifier IDA, and information field 2 is associated with model identifier IDB. Information field 1 is used to carry the first identifier that the model(s) associated with model identifier IDA needs to meet, and information field 2 is used to carry the first identifier that the model(s) associated with model identifier IDB needs to meet.

For another example, the first identifier that the model(s) need(s) to satisfy may occupy multiple information fields in the first information, where different information fields among the multiple information fields may be associated with a group of model identifiers, and different information fields among the multiple information fields carry the first identifier that the model(s) associated with this group of model identifiers need to meet.

Assume that the first identifier that the model(s) need(s) to satisfy may occupy two information fields in the first information: information field 1 and information field 2. Information field 1 is associated with model identifier group 1, and information field 2 is associated with model identifier group 2. Information field 1 is used to carry the first identifier that the model(s) associated with model identifier group 1 need to meet, and information field 2 is used to carry the first identifier that the model(s) associated with model identifier group 2 need to meet.

In other implementation manners, the first identifier that the model(s) need(s) to satisfy may be associated with the model function. For example, the first identifier that the model(s) need(s) to satisfy is associated with the model function. In other words, the first identifier that the model(s) need(s) to satisfy may be configured on a per-model-function basis. For example, one model function is associated with one first identifier that the corresponding model(s) need(s) to satisfy, and models associated with different model functions are each associated with an independent first identifier (i.e., one-to-one association). For another example, a group of model functions is associated with one first identifier that the corresponding models need to meet, and models associated with different groups of model functions are each associated with an independent first identifier (i.e., many-to-one association). A group of model functions may include one or more model functions.

In the embodiments of the present disclosure, there is no limitation on the mode of carrying the first identifier that the model(s) need(s) to satisfy. For example, the first identifier that the model(s) need(s) to satisfy may occupy multiple information fields in the first information, where different information fields among the multiple information fields may be associated with one model function, and different information fields among the multiple information fields carry the first identifier that the model(s) associated with the corresponding model function needs to meet.

Assume that the first identifier that the model(s) need(s) to satisfy may occupy two information fields in the first information: information field 1 and information field 2. Information field 1 is associated with model function A, and information field 2 is associated with model function B. Information field 1 is used to carry the first identifier that the model(s) associated with model function A needs to meet, and information field 2 is used to carry the first identifier that the model(s) associated with model function B needs to meet.

For another example, the first identifier that the model(s) need(s) to satisfy may occupy multiple information fields in the first information, where different information fields among the multiple information fields may be associated with a group of model functions, and different information fields among the multiple information fields carry the first identifier that the model(s) associated with this group of model functions need to meet.

Assume that the first identifier that the model(s) need(s) to satisfy may occupy multiple information fields in the first information: information field 1 and information field 2. Information field 1 is associated with model function group 1, and information field 2 is associated with model function group 2. Information field 1 is used to carry the first identifier that the model(s) associated with model function group 1 need to meet, and information field 2 is used to carry the first identifier that the model(s) associated with model function group 2 need to meet.

The foregoing describes the solutions in the embodiments of the present disclosure where the first identifier that the model(s) need(s) to satisfy is associated with the model identifier or model function. In the embodiments of the present disclosure, the first identifier that the model(s) need(s) to satisfy may not be associated with the model identifier or model function. In this case, the first identifier that the model(s) need(s) to satisfy may be understood as general information applicable to the matching of any relevant models.

In some implementation manners, if the model(s) supported by the terminal device has an associated second identifier, matching may be performed between the first identifier that the model(s) need(s) to satisfy as indicated by the auxiliary information and the second identifier of the model(s) supported by the terminal device. If the matching fails, the corresponding model supported by the terminal device is not applicable in the corresponding cell. If the matching succeeds, the corresponding model supported by the terminal device is applicable in the corresponding cell. The second identifier will be described later and is not repeated here for the sake of brevity.

**Taking the auxiliary information including a first character string as an example,** in some implementations, the first character string is used to indicate constraint(s) or applicable condition(s) that a model(s) need(s) to satisfy. In other words, the first character string is used to assist a terminal device in determining whether a supported model matches the model(s) concerned or required by a network device, or alternatively, the first character string is used to assist the terminal device in determining whether the supported model is applicable to a corresponding cell.

In some implementations, the first character string may be used to indicate one or more types of the aforementioned auxiliary information. For example, the first character string may be used to indicate a dataset identifier that the model(s) need(s) to satisfy. For another example, the first character string may be used to indicate both a dataset identifier that the model(s) need(s) to satisfy and a scenario identifier that the model(s) need(s) to satisfy. For yet another example, the first character string may be used to indicate a dataset identifier that the model(s) need(s) to satisfy, a scenario identifier that the model(s) need(s) to satisfy, a logical area identifier that the model(s) need(s) to satisfy, a geographic area identifier that the model(s) need(s) to satisfy, and configuration information that the model(s) need(s) to satisfy.

In the embodiments of the present disclosure, carrying the first character string in the auxiliary information assists the terminal device in determining whether the supported model is applicable to the corresponding cell, thus helping reduce the overhead of transmitting the auxiliary information.

On the other hand, since the first character string is a logical identifier, a communication device cannot determine model-related information based on the first character string, which helps improve the privacy of the model(s).

In some implementations, a second character string is used to indicate model description information (e.g., may include model applicable conditions) and/or model data of a model supported by the terminal device. If the first character string that the model(s) need(s) to satisfy as indicated by the auxiliary information matches the second character string associated with the model(s) supported by the terminal device, it indicates that the model(s) supported by the terminal device is applicable to the corresponding cell. If the first character string that the model(s) need(s) to satisfy as indicated by the auxiliary information does not match the second character string associated with the model(s) supported by the terminal device, it indicates that the model(s) supported by the terminal device is not applicable to the corresponding cell. Therefore, this matching process may also be referred to as a "model applicability matching process".

For example, for the beam prediction function, a terminal device is deployed with Model A and Model B, where the first character string associated with Model A is First Character String 1, and the first character string associated with Model B is First Character String 2. If the first character string that the model(s) need(s) to satisfy as indicated in the auxiliary information includes First Character String 2 and does not include First Character String 1, the terminal device may determine that Model B meets the auxiliary information, i.e., Model B is the model concerned or required by the network device.

In the embodiments of the present disclosure, the first character string may be understood as a logical identifier. Through determining whether the model(s) supported by the terminal device is applicable to the corresponding cell based on the logical identifier, the model development process can be decoupled from the model applicability matching process described above. In other words, during the model applicability matching process, matching can be performed directly based on the first character string without paying attention to the meaning of the first character string (e.g., relevant parameters and communication conditions of the model training process), which helps improve the flexibility of setting the first character string.

In some implementations, the first character string that the model(s) need(s) to satisfy may be associated with model function(s). In other words, the first character string that the model(s) need(s) to satisfy may be used to indicate the first character string that model(s) for implementing a certain model function concerned by the network device needs to satisfy. For example, the association between the first character string that the model(s) need(s) to satisfy and the model function may include the association between the first character string that the model(s) need(s) to satisfy and a model identifier, where the model identifier is associated with the model function. Of course, in the embodiments of the present disclosure, the association between the first character string that the model(s) need(s) to satisfy and the model function may include the direct association between the first character string that the model(s) need(s) to satisfy and the model function.

In some implementations, the aforementioned first character string that the model(s) need(s) to satisfy may be associated with the model identifier. For example, the first character string that the model(s) need(s) to satisfy is associated with the model identifier. In other words, the first character string that the model(s) need(s) to satisfy may be configured at the granularity of the model identifier. For example, one model identifier is associated with one first character string that the model(s) need(s) to satisfy, and a model associated with a different model identifier is associated with one independent first character string (i.e., one-to-one association). For another example, a group of model identifiers are associated with one first character string that the model(s) need(s) to satisfy, and models associated with different groups of model identifiers are associated with one independent first character string (i.e., many-to-one association). A group of model identifiers may include one or more model identifiers.

In the embodiments of the present disclosure, the mode of carrying the first character string that the model(s) need(s) to satisfy is not limited. For example, the first character string that the model(s) need(s) to satisfy may occupy multiple information fields in the first information, where different information fields among the multiple information fields may be associated with one model identifier, and different information fields among the multiple information fields carry the first character string that the model(s) associated with the model identifier needs to satisfy.

Assume that the first character string that the model(s) need(s) to satisfy may occupy multiple information fields in the first information: Information Field 1 and Information Field 2, where Information Field 1 is associated with model identifier IDA, Information Field 2 is associated with model identifier IDB, Information Field 1 is used to carry the first character string that the model(s) associated with model identifier IDA needs to satisfy, and Information Field 2 is used to carry the first character string that the model(s) associated with model identifier IDB needs to satisfy.

For another example, the first character string that the model(s) need(s) to satisfy may occupy multiple information fields in the first information, where different information fields among the multiple information fields may be associated with a group of model identifiers, and different information fields among the multiple information fields carry the first character string that the model(s) associated with the group of model identifiers needs to satisfy.

Assume that the first character string that the model(s) need(s) to satisfy may occupy multiple information fields in the first information: Information Field 1 and Information Field 2, where Information Field 1 is associated with model identifier group 1, Information Field 2 is associated with model identifier group 2, Information Field 1 is used to carry the first character string that the model(s) associated with model identifier group 1 needs to satisfy, and Information Field 2 is used to carry the first character string that the model(s) associated with model identifier group 2 needs to satisfy.

In other implementations, the first character string that the model(s) need(s) to satisfy may be associated with model functions. For example, the first character string that the model(s) need(s) to satisfy is associated with the model function. In other words, the first character string that the model(s) need(s) to satisfy may be configured at the granularity of the model function. For example, one model function is associated with one first character string that the model(s) need(s) to satisfy, and a model associated with a different model function is associated with one independent first character strings (i.e., one-to-one association). For another example, a group of model functions are associated with one first character string that the model(s) need(s) to satisfy, and models associated with different groups of model functions are associated with one independent first character string (i.e., many-to-one association). A group of model functions may include one or more model functions.

In the embodiments of the present disclosure, the mode of carrying the first character string that the model(s) need(s) to satisfy is not limited. For example, the first character string that the model(s) need(s) to satisfy may occupy multiple information fields in the first information, where different information fields among the multiple information fields may be associated with one model function, and different information fields among the multiple information fields carry the first character string that the model(s) associated with the model function needs to satisfy.

Assume that the first character string that the model(s) need(s) to satisfy may occupy multiple information fields in the first information: Information Field 1 and Information Field 2, where Information Field 1 is associated with model function A, Information Field 2 is associated with model function B, Information Field 1 is used to carry the first character string that the model(s) associated with model function A needs to satisfy, and Information Field 2 is used to carry the first character string that the model(s) associated with model function B needs to satisfy.

For another example, the first character string that the model(s) need(s) to satisfy may occupy multiple information fields in the first information, where different information fields among the multiple information fields may be associated with a group of model functions, and different information fields among the multiple information fields carry the first character string that the model(s) associated with the group of model functions needs to satisfy.

Assume that the first character string that the model(s) need(s) to satisfy may occupy multiple information fields in the first information: Information Field 1 and Information Field 2, where Information Field 1 is associated with model function group 1, Information Field 2 is associated with model function group 2, Information Field 1 is used to carry the first character string that the model(s) associated with model function group 1 needs to satisfy, and Information Field 2 is used to carry the first character string that the model(s) associated with model function group 2 needs to satisfy.

The solutions for associating the first character string that the model(s) need(s) to satisfy with the model identifier or model function in the embodiments of the present disclosure are described above. In the embodiments of the present disclosure, the first character string that the model(s) need(s) to satisfy may not be associated with the model identifier or model function, in which case the first character string that the model(s) need(s) to satisfy may be understood as general information applicable to the matching of any relevant models.

In some implementations, if the model(s) supported by the terminal device has an associated second character string, matching may be performed between the first character string that the model(s) need(s) to satisfy as indicated by the auxiliary information and the second character string of the model(s) supported by the terminal device. If the matching fails, the corresponding model supported by the terminal device is not applicable to the corresponding cell. If the matching succeeds, the corresponding model supported by the terminal device is applicable to the corresponding cell. The second character string is described later, and for the sake of brevity, it is not repeated here.

In the embodiments of the present disclosure, the content carried in the auxiliary information is not limited. In some implementations, in addition to the possible implementations of the auxiliary information described above, the auxiliary information may also be used to indicate model algorithm data that the model(s) need(s) to satisfy. Generally, a model has defined model input requirements and/or model output requirements. Therefore, the network device may indicate the model algorithm data that the model(s) need(s) to satisfy through the auxiliary information. In other implementations, the auxiliary information may also directly include model identifier information of the model(s) concerned by the network device. Of course, in the embodiments of the present disclosure, the auxiliary information may also include other model description information that the model(s) need(s) to satisfy. For example, the model description information may include one or more of the following: model function information of each model; type information of input parameters of each model; format information of input parameters of each model; preprocessing rule information of input parameters of each model; type information of output parameters of each model; format information of output parameters of each model; preprocessing rule information of output parameters of each model; application scenario information of each model; deployment location information of each model; capability requirement information for using each model; performance monitoring indicator information of each model; home location information of each model; valid usage range information of each model; generalization characteristic information of each model; version information of each model; precision level information of each model; compilation format information of model data of each model; storage format information of model data of each model; computational complexity information of each model; model complexity information of each model; model size information of each model. For the sake of brevity, it is not repeated here.

It should be understood that the usage mode (or applicability matching mode) of the aforementioned auxiliary information is similar to the usage mode of the auxiliary information described above, and reference may be made to the above description.

The meaning of the auxiliary information in the embodiments of the present disclosure has been described above, and the method for wireless communication in the embodiments of the present disclosure will be described below with reference to FIG. 5. The method shown in FIG. 5 includes step S510. At operation S510, a terminal device transmits first information to a network device. The first information in the embodiments of the present disclosure will be described separately below in conjunction with Embodiment 1 and Embodiment 2.

### Embodiment One

In some implementations, the first information is used to indicate one or more models, where the model description information and/or model data associated with each of the one or more models meets the one or more constraints contained in the auxiliary information provided by the network device. In other words, the one or more models indicated by the first information are determined based on the auxiliary information provided by the network device.

In the embodiments of the present disclosure, the terminal device may indicate one or more models that meet the one or more constraints contained in the auxiliary information provided by the network device through the first information. In other words, the terminal device may provide the first information according to the actual requirements of the network device, which helps prevent the terminal device from providing invalid model information to the network device and saves the overhead of the terminal device indicating model information to the network device. On the other hand, the terminal device may indicate one or more models that meet the one or more constraints contained in the auxiliary information provided by the network device through the first information. Correspondingly, the network device may manage the models based on the first information, which helps avoid system performance loss or terminal device performance degradation caused by the network device blindly activating inapplicable models. For example, if the network device blindly activates an inapplicable model, it may trigger connection re-establishment of the terminal device, resulting in unnecessary information interaction and reducing the performance of the communication system. For another example, if the network device blindly activates an inapplicable model, it may trigger an increase in the bit error rate of signal demodulation of the terminal device, leading to performance degradation of the terminal device.

In some implementations, the first information may carry model identifiers of one or more models and indicate the one or more models through the model identifiers, which helps reduce the overhead of transmitting the first information.

In some implementations, the model identifier is used to identify or distinguish different models, or in other words, the model identifier is used to identify or distinguish different model algorithm data. The model algorithm data may refer to a model obtained through a model training process.

In some implementations, if the model data associated with each of the one or more models meets the one or more constraints contained in the auxiliary information provided by the network device, where the model data may include model algorithm data. Generally, a model has certain requirements for model input and model output. In other words, a model usually defines model input requirements and model output requirements. Therefore, if the auxiliary information indicates the model algorithm data that the model(s) need(s) to satisfy through constraints, the model data associated with each of the aforementioned one or more models meets the constraints.

In some implementations, if the model description information associated with each of the one or more models meets the constraints (used for matching with the model description information) contained in the auxiliary information provided by the network device, where the model description information is used to describe the model(s), or in other words, the model description information is used to describe the usage conditions of the model(s).

In some implementations, the model description information may include one or more of the following: model function information of each model; type information of input parameters of each model; format information of input parameters of each model; preprocessing rule information of input parameters of each model; type information of output parameters of each model; format information of output parameters of each model; preprocessing rule information of output parameters of each model; application scenario information of each model; deployment location information of each model; capability requirement information for using each model; performance monitoring indicator information of each model; home location information of each model; valid usage range information of each model; generalization characteristic information of each model; version information of each model; precision level information of each model; compilation format information of model data of each model; storage format information of model data of each model; computational complexity information of each model; model complexity information of each model; model size information of each model; geographic area information applicable to each model; logical area information applicable to each model; applicable scenario information of each model; applicable configuration information of each model; applicable dataset information of each model; second identifier corresponding to each model; and second character string information corresponding to each model.

### Information 1: model function information of each model

Information 1 may be used to indicate the function or functional characteristic associated with the corresponding model. For example, Model 1 is used for the Channel State Information (CSI) compression feedback function, Model 2 for the mobility enhancement function, Model 3 for the beam prediction function, Model 4 for the positioning function, and so forth.

### Information 2: type information of input parameters of each model

Information 2 may be used to indicate the types of input parameters required by the corresponding model. For example, Model 3 is used for the beam prediction function, and the required types of input parameters include the index information of actually measured beams, the signal measurement result information of each actually measured beam, etc.

### Information 3: format information of input parameter(s)of each model

Information 3 may be used to indicate the format of input parameters required by the corresponding model. For example, Model 3 is used for the beam prediction function. Assume that a network device can schedule resources in 8 beam directions but only transmits measurement reference signals in 4 of these beam directions; then, the terminal device can only obtain measurement results of 4 beams in each measurement process.

Scenario 1: The beam prediction model only predicts the signal measurement results of other unmeasured beams at the current moment. If the beam prediction model used in Scenario 1 only requires the input of measurement results of 4 beams, the measurement results of 4 beams obtained by the terminal device in each measurement process can be directly used as the input of the beam prediction model in Scenario 1 (the output can be the measurement results of 8 beams associated with this measurement, i.e., 4 true values and 4 predicted values, or the output can be the predicted measurement results of 4 beams).

Scenario 2: The beam prediction model is used to predict the measurement results of 8 beams in a future period of time. In this scenario, the input of the beam prediction model may be a set of measurement results of 4 beams obtained in the past N measurement processes, and the output of the beam prediction model is a set of measurement results of 8 beams in a future period of time. For example, the input of the beam prediction model is a set of three groups of measurement results of 4 beams obtained at time T-3, T-2, and T-1, and the output of the beam prediction model is a set of two groups of measurement results of 8 beams at time T and T+1.

In summary, even when the measurement results of 4 measured beams are used for beam prediction (the types of model input parameters are the same), the required input data formats corresponding to different application scenarios are different. Therefore, the information about the format requirements of input parameters associated with the model is also one of the key pieces of information describing the model.

### Information 4: preprocessing rule information of input parameter(s) of each model

Information 4 may be used to indicate how to reprocess the input data set of the corresponding model. The operations involved in the reprocessing process may include at least one of data dimensionality reduction, data dimensionality increase, redundancy elimination, and data redistribution.

Data Dimensionality Reduction: If the dimension of the data is higher than the dimension required by the model input, data dimensionality reduction needs to be performed on the data through preprocessing rules before inputting the data into the model.

Data Dimensionality Increase: If the dimension of the data is lower than the dimension required by the model input, data dimensionality increase needs to be performed on the data through preprocessing rules before inputting the data into the model.

Redundancy Elimination: If the distribution or information content of multiple groups of data is almost the same, redundancy elimination needs to be performed on the data through preprocessing rules before inputting the data into the model, because redundant data often cannot bring more performance improvement but increases invalid operations.

Data Redistribution: In some cases, a model obtained by training data with similar feature information together is difficult to achieve good model generalization. Redistributing data with different feature information is conducive to obtaining a model with good generalization.

For example, for Scenario 1 in Information 3, the terminal device can measure 4 out of 8 beams in Cell A, 5 out of 8 beams in Cell B, and 3 out of 8 beams in Cell C. If the same beam prediction model (which only requires the input of measurement results of 4 beams) is to be used for beam prediction in Cells A, B, and C, the measurement results of Cell A can be directly used; however, the measurement results obtained in Cell B need to undergo data dimensionality reduction, i.e., selecting 4 measurement results from the measurement results of 5 available beams as the input parameters required by the model; and the measurement results obtained in Cell C need to undergo data dimensionality increase, i.e., converting the measurement results of 3 available beams into 4 to obtain the input parameters required by the model.

In another implementation manner, at least two of Information 2, Information 3, and Information 4 may be defined in a combined manner, which is not limited in the present disclosure.

### Information 5: type information of output parameter(s) of each model

Information 5 may be used to indicate the types of output parameters required by the corresponding model. For example, Model 3 is used for the beam prediction function, and the corresponding types of output parameters include the index information of actually unmeasured beams, the predicted signal measurement result information of each actually unmeasured beam, etc.

### Information 6: format information of output parameter(s) of each model

Information 6 may be used to indicate the format of output parameters required by the corresponding model. For example, Model 3 is used for the beam prediction function, and the output parameters may be the beam prediction results at a future moment or a set of beam prediction results at multiple future moments. For example, the model input is a set of three groups of measurement results of 4 beams obtained at time T-3, T-2, and T-1, and the model output may be the measurement results of 8 beams at time T, or a set of two groups of measurement results of 8 beams at time T and T+1.

In summary, even when predicting future beam measurement results (the types of model output data are the same), the required output data formats of Model 3 corresponding to different application scenarios are different. Therefore, the information about the format requirements of output parameters associated with the model is also one of the key pieces of information describing the model.

### Information 7: preprocessing rule information of output parameter(s) of each model

Information 7 may be used to indicate how to reprocess the output data set of the corresponding model. The operations involved in the reprocessing process may include at least one of data dimensionality reduction, data dimensionality increase, redundancy elimination, and data redistribution. For specific processing methods, refer to the relevant description in Information 4.

In another implementation manner, at least two of Information 5, Information 6, and Information 7 may be defined in a combined manner, which is not limited in the present disclosure.

### Information 8: application scenario information of each model

Information 8 may refer to different usage scenarios under the same functional characteristic. For example, for a model used for positioning, the application scenarios can be further subdivided into Line of Sight (LoS) scenarios (or direct path scenarios), Non-Line of Sight (NLoS) scenarios (or non-direct path scenarios), or hybrid scenarios (including both LoS and NLoS). For another example, for a model used for mobility control, the application scenarios can be further subdivided into terrestrial communication scenarios and non-terrestrial communication scenarios (including sub-scenarios such as satellite communication, unmanned aerial vehicle communication, and hot air balloon communication). Each type of scenario can be further divided into sub-scenarios such as high-speed mobility scenarios, medium-speed mobility scenarios, and low-speed mobility scenarios, and can also be divided into sub-scenarios such as high-frequency mobility scenarios and low-frequency mobility scenarios. A combination of two scenarios can also be considered, such as a terrestrial communication high-frequency mobility scenario.

Optionally, Information 8 may also have a value, where the meaning of the value indicates that the application scenario of the model is a full scenario (i.e., the model is applicable to any scenario corresponding to its associated functional characteristic). For example, for a model used for positioning, assume that Information 8 includes two bits: the value '00' can be used to indicate any scenario, '01' to indicate an LoS scenario, '10' to indicate an NLoS scenario, and '11' to indicate a hybrid scenario.

### Information 9: deployment location information of each model

Information 9 may include any one of the following meanings: deployed in a core network device, deployed in an application server, deployed in an Operation Administration and Maintenance (OAM) system, deployed in an access network device, deployed in a terminal device, or no restriction on the deployment location.

### Information 10: Capability Requirement Information for Using Each Model

Information 10 may be used to indicate several capability requirements for using the model. For example, the capability requirement information for using the model includes one or more of the following: the minimum requirement for floating-point operation capability when using the model, the minimum requirement for running memory when using the model, the memory size level occupied by the model algorithm data before compilation, the memory size level occupied by the model algorithm data after compilation, the minimum rate (or code rate) of input data required when using the model, the maximum rate (or code rate) of input data required when using the model, the minimum rate (or code rate) of output data required when using the model, and the maximum rate (or code rate) of output data required when using the model.

### Information 11: performance monitoring indicator information of each model

Information 11 may be used to indicate several indicators for monitoring the model. For example, the performance monitoring indicator information associated with the model includes one or more of the following: the average energy consumption of a single inference process, the average number of floating-point calculations of a single inference process, the average time delay of a single inference process, system throughput, system bit error rate, average packet transmission delay, and inference accuracy of the model.

### Information 12: home location information of each model

Information 12 may be used to indicate information related to the provider of the model data. For example, Information 12 may include the country/region information to which the model data belongs and/or the service provider information to which the model data belongs.

The service provider may be any one of the following: Over The Top (OTT) vendor information, network operator information (e.g., represented by a Public Land Mobile Network (PLMN) identifier), and public website information.

### Information 13: valid usage range information of each model

Information 13 may include, for example, one or more of the applicable scenario, configuration, site information, etc., of the model. Information 13 may be used to indicate the conditions under which the model is effectively used. For example, the valid usage range information associated with the model includes one or more of the following: geographic area information allowing effective use, country information allowing effective use, PLMN information allowing effective use, Tracking Area Code (TAC) information allowing effective use, RAN Area Code (RANAC) information allowing effective use, cell information allowing effective use, and configuration information allowing effective use.

### Information 14: generalization characteristic information of each model

The generalization characteristic reflects the extent of applicable scenarios of a model. Generally speaking, the higher the generalization characteristic of a model, the more application scenarios the model is applicable to. The generalization characteristic information of a model may include application scenario information of at least one model (refer to the definition of Information 8), which is used to indicate that the corresponding associated model can be used in the included application scenarios.

### Information 15: version information of each model

As different parameters in the same application scenario change over time, the algorithm data of the model with the corresponding function may need to be fine-tuned or updated. The updated model has the same application scenario and function as the model before update, with only slight differences in the details of the model algorithm data. Therefore, the model algorithm version number can be used for distinction, which is convenient for the control and management of similar model algorithms.

Information 16: precision level information of each model (e.g., indicating the precision level of the model)

Even for models targeting the same function and the same application scenario, different complexity of model algorithm design will result in different inference precision of the corresponding models. To distinguish the differences in inference precision among similar models, the precision level information of the model algorithm can be used to describe the inference precision of a corresponding model.

### Information 17: compilation format information of model data of each model

A model algorithm is essentially a program written in a computer language, and the types of program files written in different language platforms are different. Some languages are compatible with each other while others are not. Therefore, the compilation format information of the model algorithm data is also important information describing a model, which enables model users to know the compilation environment required for using the model. Otherwise, using an incompatible language compilation environment by mistake will make it impossible to use the corresponding model algorithm.

### Information 18: storage format information of model data of each model

Information 18 may be used to indicate the format in which the model data is stored, such as zip compression format, etc.

### Information 19: computational complexity information of each model

Information 19 may be used to indicate the basic computing capability required for using the model, such as the number of floating-point calculations required per second.

### Information 20: model complexity information of each model

Information 20 may be used to indicate the complexity of the model, such as the number of neuron layers the model consists of.

### Information 21: model size information of each model

Information 21 may refer to the memory size occupied by the model data before or after compilation.

Taking the model description information including the geographic area information applicable to each model as an example, the geographic area information can refer to the introduction of geographic area information in the auxiliary information, which is not repeated here for brevity.

Taking the model description information including the logical area information applicable to each model as an example, the logical area information can refer to the introduction of logical area information in the auxiliary information, which is not repeated here for brevity.

Taking the model description information including the applicable scenario information of each model as an example, the scenario information can refer to the introduction of scenario information in the auxiliary information, which is not repeated here for brevity.

Taking the model description information including the applicable configuration information of each model as an example, the configuration information can refer to the introduction of configuration information in the auxiliary information, which is not repeated here for brevity.

Taking the model description information including the applicable dataset information of each model as an example, the dataset information can refer to the introduction of dataset information in the auxiliary information, which is not repeated here for brevity.

Taking the model description information including the second identifier corresponding to each model as an example, in some implementations, the second identifier is used to indicate the model description information and/or model data of the model supported by the terminal device.

As described above, the second identifier is used in conjunction with the first identifier to determine whether the model supported by the terminal device is applicable to the corresponding cell. In the embodiments of the present disclosure, the first identifier is used to indicate the auxiliary information that the model needs to satisfy, while the second identifier is used to indicate the model description information and/or model data of the model supported by the terminal device. Except for the above differences, the second identifier is similar to the first identifier, and reference can be made to the above description; the description about the first identifier above can be directly replaced with the second identifier.

Taking the model description information including the second character string corresponding to each model as an example, in some implementations, the second character string is used to indicate the model description information and/or model data of the model(s) supported by the terminal device.

As described above, the second character string is used in conjunction with the first character string to determine whether the model supported by the terminal device is applicable to the corresponding cell. In the embodiments of the present disclosure, the first character string is used to indicate the auxiliary information that the model needs to satisfy, while the second character string is used to indicate the model description information and/or model data of the model supported by the terminal device. Except for the above differences, the second character string is similar to the first identifier, and reference can be made to the above description; the description about the first identifier above can be directly replaced with the second character string.

### Embodiment Two

In some implementations, the first information is used to indicate whether the terminal device has model(s) for implementing one or more model functions. Correspondingly, whether the terminal device has the model(s) for implementing one or more model functions is determined based on the one or more constraints contained in the auxiliary information provided by the network device.

In the embodiments of the present disclosure, the terminal device can generate the first information based on the model functions to inform the network device of the model information. In this solution, the participation of model identifiers is not required, that is to say, the embodiments of the present disclosure can be applied to scenarios where model identifiers are not introduced, which helps expand the application scenarios of the embodiments of the present disclosure and improve the flexibility of implementing the solution. Of course, the embodiments of the present disclosure can also be applied to scenarios where model identifiers are introduced.

In some implementations, the terminal device can determine whether the terminal device has model(s) for implementing one or more model functions based on the model description information and/or model data associated with each model function among the one or more model functions. In other words, the one or more constraints contained in the auxiliary information provided by the network device are used to constrain the model description information and/or model data associated with the model(s); correspondingly, the terminal device can determine whether the terminal device has model(s) for implementing one or more model functions based on the model description information and/or model data associated with each model function among the one or more model functions and the auxiliary information.

In some implementations, the first information includes a first bit corresponding to each model function among the one or more model functions, where the first bit is used to indicate whether the terminal device has model(s) for implementing the corresponding model function.

In some implementations, one first bit in the first information can correspond to one model function, which helps reduce the transmission overhead of the first information. Of course, in the embodiments of the present disclosure, multiple first bits in the first information can correspond to one model function.

For example, if the value of the first bit is a first value, it indicates that the terminal device has model(s) for implementing the corresponding model function. If the value of the first bit is a second value, it indicates that the terminal device does not have model(s) for implementing the corresponding model function. The first value is different from the second value; for example, the first value can be 1 and the second value can be 0, or the first value can be 0 and the second value can be 1.

In some implementations, if the first information needs to indicate whether the terminal device has model(s) for implementing multiple model functions, the first information can include multiple first bits; in this case, the multiple first bits can also be referred to as a "first bit string".

In the embodiments of the present disclosure, the method for determining the number of first bits is not limited. In some implementations, the number of first bits can be predefined. For example, the number of first bits can be defined through a communication protocol. That is to say, the communication protocol explicitly defines the number of bits contained in the first bit string.

In some implementations, the model functions corresponding to the multiple first bits can be predefined, that is to say, the model function associated with each bit in the first bit string can be predefined. The predefined manner may include, for example, predefined through a communication protocol.

In some scenarios, the number of first bits in the first bit string can be greater than the number of corresponding model functions, that is to say, the first bit string can include reserved bits, which may not correspond to any model function. The setting of the reserved bits can correspond to new model functions introduced in future communication systems. Of course, in the embodiments of the present disclosure, the first bit string may not include reserved bits to reduce the transmission overhead of the first bit string.

In other scenarios, if each first bit in the first bit string corresponds to a model function and new model functions need to be indicated, the number of bits can be expanded in a predefined manner for associating with the new model functions.

For example, the protocol predefines that the first bit string includes 10 bits, where the 1st bit is associated with the CSI compression feedback function, the 2nd bit with the CSI time-domain prediction function, the 3rd bit with the beam space-domain prediction function, the 4th bit with the beam time-domain prediction function, the 5th bit with the direct positioning function, the 6th bit with the indirect positioning function, the 7th bit with the mobility function, and the remaining 3 bits are reserved for future AI function expansion.

In another implementation manner, the number of first bits can be determined based on the auxiliary information of the network device. For example, if the auxiliary information is associated with one or more model functions, the number of first bits can be determined based on the number of model functions associated with the auxiliary information, which helps improve the flexibility of determining the number of first bits.

In some implementations, if the auxiliary information is associated with one or more model functions, the number of first bits can be determined based on the model functions associated with the auxiliary information, including that the number of first bits is equal to the number of model functions associated with the auxiliary information. Of course, in the embodiments of the present disclosure, the number of first bits can be obtained by adding a preset number of bits to the number of model functions associated with the auxiliary information.

It should be noted that in some scenarios, various types of information indicated by the auxiliary information described above (e.g., model description information and/or model data) can be associated with one or more model functions, and then the model functions associated with the auxiliary information can be determined based on this association relationship. Of course, in the embodiments of the present disclosure, the auxiliary information can also directly indicate multiple model functions concerned by the network device.

In some implementations, if multiple model functions associated with the auxiliary information are sorted in the auxiliary information according to a first order, the sorting order of the first bits corresponding to the multiple model functions in the first bit string is determined based on the first order. For example, the sorting order of the first bits corresponding to the multiple model functions in the first bit string is the first order, or the reverse order of the first order.

For example, the auxiliary information is associated with 7 model functions: CSI compression feedback function, CSI time-domain prediction function, beam space-domain prediction function, beam time-domain prediction function, direct positioning function, indirect positioning function, and mobility function. Correspondingly, the first bit string can include 7 bits, where the 1st bit is associated with the CSI compression feedback function, the 2nd bit with the CSI time-domain prediction function, the 3rd bit with the beam space-domain prediction function, the 4th bit with the beam time-domain prediction function, the 5th bit with the direct positioning function, the 6th bit with the indirect positioning function, and the 7th bit with the mobility function.

The auxiliary information and the first information involved in the embodiments of the present disclosure are described above, and the method for transmitting relevant information in the embodiments of the present disclosure is described below.

In some implementations, before operation S510, the above method further includes: the network device transmits auxiliary information to the terminal device (refer to operation S610 shown in FIG. 6).

In the embodiments of the present disclosure, the triggering mode of the first information is not limited. In some implementations, the transmission of the first information can be triggered by the auxiliary information, that is to say, the above operation S510 includes: in response to receiving the auxiliary information, the terminal device transmits the first information to the network device. In other implementations, the transmission of the first information can be triggered by first indication information (refer to operation S620 shown in FIG. 6), that is to say, before operation S510, the above method further includes: the network device transmits first indication information to the terminal device, where the first indication information is used to indicate the terminal device to transmit the first information.

In the embodiments of the present disclosure, the triggering mode of the auxiliary information is not limited. In some implementations, the transmission of the auxiliary information can be actively transmitted by the network device, for example, the network device can trigger the transmission periodically. In other implementations, the transmission of the auxiliary information can be triggered by second indication information, which will be described in detail in Scenario 3 below and is not repeated here for brevity. It should be noted that the transmission solution of the second indication information can be applied to Scenario 3 and other scenarios.

In the embodiments of the present disclosure, the mode of carrying the above information is not limited. For ease of understanding, the modes of carrying the above information are described below in conjunction with Scenario 1 and Scenario 2 respectively.

### Scenario 1: information transmission solution during the connection establishment process

In some implementations, the first information is carried in one or more of the following: a connection establishment complete message, a connection resume complete message, a connection re-establishment complete message, a first Radio Resource Control (RRC) message (where the first RRC message is the first RRC message transmitted by the terminal device to the network device after successfully receiving contention resolution information in a contention-based random access procedure), a second RRC message (where the second RRC message is the first RRC message transmitted by the terminal device to the network device after entering the connected state).

Generally speaking, to ensure communication continuity, if the terminal device needs to perform connected-state data transmission with a configuration matching the current serving cell, the terminal device may transmit the above message (i.e., the message used to carry the first information) to the network device, and may receive an RRC reconfiguration message transmitted by the network device in a relatively short time. Therefore, in the embodiments of the present disclosure, the first information is carried in one or more of the above messages; in this case, the first information can be understood as providing pre-auxiliary information for the RRC reconfiguration message to be transmitted by the network device, i.e., assisting the network device in obtaining the model information available to the terminal device in the current serving cell. On the one hand, this mode of carrying the first information can assist the network device in timely providing configuration parameters matching the available models of the terminal device through the RRC reconfiguration message. On the other hand, this mode of the carrying first information helps prevent the network device from providing configuration parameters associated with models that the terminal device cannot support, which would trigger a connection re-establishment process, cause service interruption, and reduce user experience.

In some implementations, the auxiliary information is carried in one or more of the following: a connection establishment message, a connection resume message, a connection re-establishment message, and message B in a two-step random access procedure. This solution can be applied to the solution where the first information is triggered by the auxiliary information described above.

In other implementations, the auxiliary information is carried in a system broadcast message. This solution can be applied to the solution where the first information is triggered by the first indication information described above. Of course, in the embodiments of the present disclosure, this solution can also be applied to the solution where the first information is triggered by the auxiliary information described above.

It should be noted that in some scenarios, the auxiliary information may be transmitted through a system broadcast message (referred to as Mode 1 for short) and transmitted again through messages such as a connection establishment message, a connection resume message, a connection re-establishment message, and message B in a two-step random access procedure (referred to as Mode 2 for short). Generally speaking, the auxiliary information transmitted twice may be different. In this case, the auxiliary information transmitted in Mode 1, which is carried in a system broadcast message, can be understood as general information for multiple terminal devices. The auxiliary information transmitted in Mode 2 can be transmitted for a specific terminal device. Therefore, the auxiliary information transmitted in Mode 1 can be ignored, and priority is given to the auxiliary information transmitted in Mode 2, i.e., the first information is generated based on the auxiliary information transmitted in Mode 2. Of course, if the above reasons are not considered, the first information can also be generated based on the auxiliary information transmitted in Mode 1.

In some implementations, the first indication information is carried in one or more of the following: a connection establishment message, a connection resume message, a connection re-establishment message, and message B in a two-step random access procedure.

It should be understood that the solutions of the embodiments of the present disclosure can be applied to a four-step random access procedure and a two-step random access procedure, which is not limited in the embodiments of the present disclosure.

In addition, the above connection establishment scenario may include connection establishment during the connection resume process. Generally speaking, the information exchanged in the connection resume process can be protected by corresponding transmission security measures. Therefore, transmitting the above information in this scenario helps improve the security of information transmission.

### Scenario 2: information transmission solution in the reconfiguration scenario

In some implementations, the first information is carried in a reconfiguration complete message associated with a first reconfiguration message.

In the embodiments of the present disclosure, since the reconfiguration complete message is a connected-state message, carrying the first information through the reconfiguration complete message enables the first information transmission to be performed with information transmission security (integrity protection and encryption protection of information), which helps improve the security of the first information transmission.

In some implementations, the first reconfiguration message carries auxiliary information, and the first reconfiguration message is used to reconfigure or update the configuration information of the terminal device.

In the embodiments of the present disclosure, since the reconfiguration message is a connected-state message, carrying the auxiliary information through the reconfiguration message enables the first information transmission to be performed with information transmission security (integrity protection and encryption protection of information), which helps improve the security of the first information transmission. Two implementation manners of the first reconfiguration message in the embodiments of the present disclosure are described below.

Implementation Manner 1: The first reconfiguration message is generated by a current serving cell of the terminal device. This solution can be applied to scenarios where the serving cell is not changed. That is to say, since the first reconfiguration message is generated by the serving cell and the first reconfiguration message is used to update the configuration information of the terminal device in the serving cell, the terminal device does not change the serving cell after receiving the first reconfiguration message. In this case, the first reconfiguration message may include synchronization reconfiguration parameters or not include synchronization reconfiguration parameters. In some scenarios, after successfully receiving the first reconfiguration message, the terminal device may respond with a reconfiguration complete message to the serving cell.

Implementation Manner 2: The first reconfiguration message is generated by a handover target cell of the terminal device, where the handover target cell can be understood as a target cell that the terminal device is ready to hand over to during the cell handover process. This solution can be applied to scenarios where the serving cell is changed. That is to say, the auxiliary information carried in the first reconfiguration message is generated by the target cell, and the first reconfiguration message indicates the terminal device to access the handover target cell to continue receiving services; therefore, the first reconfiguration message can also be referred to as a "handover command". In this case, since the network device of the target cell cannot directly communicate with the terminal device, the network device can transmit a synchronization reconfiguration message (which may include auxiliary information) to the terminal device through the network device of the serving cell (source network device). Usually, in this case, the terminal device may hand over to the target cell in a relatively short time and transmit a reconfiguration complete message (which may include the first information) to the handover target cell.

In some implementations, the above first reconfiguration message includes synchronization reconfiguration parameters.

In some implementations, the above first reconfiguration message can be transmitted by the network device of the target cell (target network device) to the source network device through an inter-network device interface configuration initialization message and/or an interface configuration update message.

In some implementations, after the terminal device receives the first reconfiguration message generated by the target cell, the terminal device executes a cell handover process to access the target cell; correspondingly, during the process of accessing the target cell, the terminal device may transmit a reconfiguration complete message associated with the first reconfiguration message to the target cell. In this case, the reconfiguration complete message includes the first information, which helps improve the efficiency of transmitting the first information in the scenario of cell handover.

Assume that the terminal device supports Model A, Model B, Model C, and Model D. The target network device generates a synchronization reconfiguration message including auxiliary information (e.g., the auxiliary information indicates that the models concerned by the target network device are Model A, Model B, and Model D) and transmits the same to the source network device through an inter-base station interface message. The source network device transparently transmits the synchronization reconfiguration message to the terminal device. Based on the auxiliary information, the terminal device may transmit a reconfiguration complete message to the target network device, where the reconfiguration complete message may include a model identifier of Model A, a model identifier of Model B, a model identifier of Model D, model description information associated with Model A, model description information associated with Model B, and model description information associated with Model D.

In other implementations, the first information can be transmitted to the target network device through the source network device. That is to say, before the terminal device receives the first reconfiguration message, the above method further includes: the source network device transmits a handover preparation message (or "handover request message") to the target network device. The handover preparation message includes first information.

For example, the above first information can include one or more model identifiers supported by the terminal device and/or the model description information associated with each model. In this case, the one or more AI model identifiers supported by the terminal device and/or the model description information associated with each model contained in the handover preparation message have been filtered by third information, where the third information includes one or more AI model identifiers supported by the handover target cell and/or the model description information associated with each model.

In the embodiments of the present disclosure, the first information may be generated based on the third information, which helps filter out information that is not concerned by the handover target cell, thereby improving the accuracy of the first information provided by the handover preparation message.

In the embodiments of the present disclosure, the above solution of filtering based on the third information is executed by the source network device. Assume that the terminal device supports Model A, Model B, Model C, and Model D. The source network device learns that the models concerned by the target cell are Model A, Model B, and Model D through an interface configuration initialization message or an interface configuration update message. In this case, the source network device may transmit a handover preparation message to the target network device, where the handover preparation message may include the model identifier of Model A, the model identifier of Model B, the model identifier of Model D, the model description information associated with Model A, the model description information associated with Model B, and the model description information associated with Model D.

For example, the terminal device supports Model A, Model B, Model C, and Model D. Correspondingly, the source network device may learn through a reconfiguration complete message (e.g., in the manner of Scenario 1 described above) that the terminal device can use Model A, Model B, and Model C in the serving cell. The source network device receives the third information transmitted by the target network device through an interface configuration initialization message or an interface configuration update message, so as to determine that the models concerned by the target network device are Model A, Model B, and Model D. According to an implementation solution described in Scenario 2, the source serving cell transmits a handover preparation message to the target network device, where the handover preparation message includes the model identifier of Model A, the model identifier of Model B, the model description information associated with Model A, and the model description information associated with Model B (filtered based on the third information). After that, the target network device may learn the model identifier of Model D supported by the terminal device and the model description information associated with Model D in the manner of Scenario 2 described above.

Of course, in the embodiments of the present disclosure, the above solution of filtering based on the third information may not be executed, so as to simplify the relevant operations of the source network device. For example, the one or more AI model identifiers supported by the terminal device and/or the model description information associated with each model contained in the handover preparation message are not filtered based on the third information, where the third information includes the one or more AI model identifiers supported by the target cell and/or the model description information associated with each model.

For example, the terminal device supports Model A, Model B, Model C, and Model D. The source network device learns through a reconfiguration complete message (e.g., in the manner of Scenario 1 described above) that the terminal device can use Model A, Model B, and Model C in the serving cell. Then, according to the relevant solution described in Scenario 2, the source network device transmits a handover preparation message to the target network device, where the handover preparation message includes the model identifier of Model A, the model identifier of Model B, the model identifier of Model C, the model description information associated with Model A, the model description information associated with Model B, and the model description information associated with Model C (not filtered based on the third information). After that, the target cell may learn the model identifier of Model D supported by the terminal device and the model description information of Model D in the manner of Scenario 2 described above. Although the handover target cell does not care about Model C, and the model description information associated with Model C will not be used by the handover target cell, it will not bring additional operations to the handover target cell except for a small amount of information storage overhead.

In the embodiments of the present disclosure, the relevant solutions described based on Scenario 1 and Scenario 2 may be used independently. Of course, in the embodiments of the present disclosure, the relevant solutions described based on Scenario 1 and Scenario 2 may be used in combination with each other.

### Scenario 3: information transmission solution for terminal devices in Idle state, Inactive state, or Connected state

In some implementations, the auxiliary information is carried in a connected-state dedicated message.

In some implementations, referring to FIG. 7, the auxiliary information may be triggered by the second indication information, and the above method further includes: the terminal device transmits the second indication information to the network device (refer to step S710), which helps to timely notify the network device to extract or update the first information, so as to consider the actual model deployment of the terminal device in subsequent control processes and give full play to the technical advantages of the model functions. Of course, in the embodiments of the present disclosure, the auxiliary information may be actively triggered by the network device.

In some implementations, referring to step S610 in FIG. 7, the method shown in FIG. 7 includes: in response to receiving the second indication information, the network device transmits the auxiliary information to the terminal device.

In some implementations, the second indication information is used to indicate one or more of the following: the terminal device supports one or more models; the terminal device has model information to be transmitted; the model information supported by the terminal device has been updated.

Taking the second indication information including that the terminal device has model information to be transmitted as an example, in some implementations, the model information may include one or more of a model identifier, model description information, and model applicability information, where the model applicability information is used to indicate the applicable state of the model (e.g., the applicable state includes the content of the above first information).

Taking the second indication information including that the model information of the model(s) supported by the terminal device has been updated as an example, in some implementations, the model information of the model may include one or more of a model identifier, model description information, and model applicability information. Correspondingly, the update of the model information of the model may include the update of one or more of the model identifier, model description information, and model applicability information.

In some implementations, the second indication information is carried in one or more of the following messages: a connection establishment complete message, a connection resume complete message, a connection re-establishment complete message, a reconfiguration complete message, and a terminal device auxiliary information message.

In some implementations, referring to step S510 in FIG. 7, the method shown in FIG. 7 includes: in response to receiving the auxiliary information, the terminal device transmits the first information to the network device.

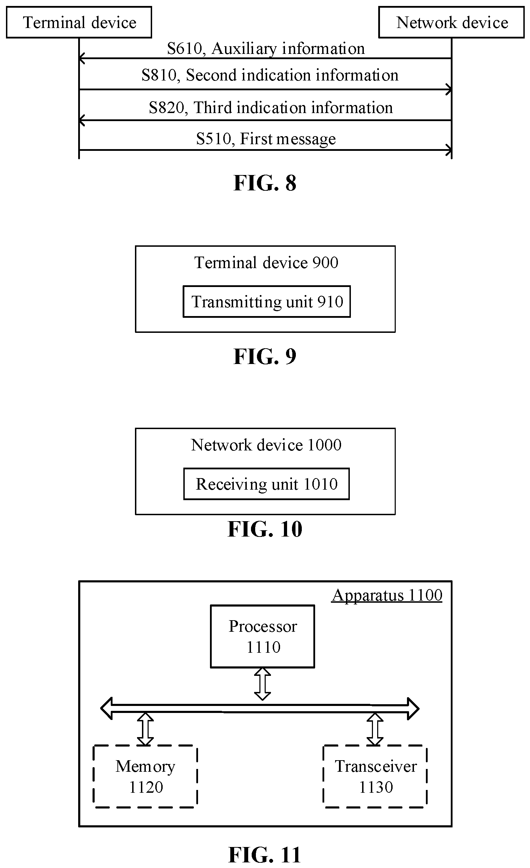

A transmission mode of the second indication information in an embodiment of the present disclosure is described above with reference to FIG. 7, and the second indication information in another embodiment of the present disclosure is described below with reference to FIG. 8.

In some implementations, referring to step S810 shown in FIG. 8, the second indication information may be transmitted after the auxiliary information.

In some implementations, the second indication information is used to indicate one or more of the following: the terminal device supports one or more models; the terminal device has model information to be transmitted; the model information of the model(s) supported by the terminal device has been updated; and at least one model deployed by the terminal device meets the one or more constraints contained in the auxiliary information.

Taking the second indication information including that the terminal device has model information to be transmitted as an example, in some implementations, the model information to be transmitted may include the model information of the model(s) that meets the constraints of the auxiliary information. The auxiliary information may be the auxiliary information transmitted by the network device to the terminal device before the second indication information (refer to step S610 in FIG. 8). That is to say, if there is model information that meets the auxiliary information, the terminal device may transmit the second indication information to the network device.

In some implementations, the model information may include one or more of a model identifier, model description information, and model applicability information, where the model applicability information is used to indicate the applicable state of the model(s) (e.g., the applicable state includes the content of the above first information).

Taking the second indication information including that the model information of the model(s) supported by the terminal device has been updated as an example, in some implementations, the model(s) supported by the terminal device may be model(s) that meets the constraints in the auxiliary information. The auxiliary information may be the auxiliary information transmitted by the network device to the terminal device before the second indication information (refer to step S610 in FIG. 8). That is to say, if the model information of the model(s) that meets the auxiliary information is updated, the terminal device may transmit the second indication information to the network device.

In some implementations, the model information of the model(s) may include one or more of a model identifier, model description information, and model applicability information. Correspondingly, the update of the model information of the model(s) may include update of one or more of the model identifier, model description information, and model applicability information.

Taking the second indication information including that at least one model deployed by the terminal device meets the one or more constraints contained in the auxiliary information as an example, in some implementations, the auxiliary information may be auxiliary information transmitted by the network device to the terminal device before the second indication information (refer to step S610 in FIG. 8). That is to say, if there is model information of the model(s) that meets the auxiliary information, the terminal device may transmit the second indication information to the network device.

In some implementations, the second indication information is carried in one or more of the following: a connection establishment complete message, a connection resume complete message, a connection re-establishment complete message, a reconfiguration complete message, and a terminal device auxiliary information message.

In some implementations, referring to step S820 in FIG. 8, the above method further includes: in response to transmitting the second indication information, the network device transmits third indication information to the terminal device.

In some implementations, the third indication information is used to indicate one or more model identifiers of one or more models concerned by the network device, and/or the third indication information is used to indicate the terminal device to transmit the first information.

In some implementations, referring to step S510 in FIG. 8, the method shown in FIG. 8 includes: in response to receiving the third indication information, the terminal device transmits the first information to the network device.

In some implementations, the third indication information is carried in a connected-state dedicated message, where the connected-state dedicated message is used for a terminal device to acquire the message, or the receiving end of the connected-state dedicated message is the terminal device.

In some implementations, the second indication information is carried in one or more of the following: a connection establishment complete message, a connection resume complete message, a connection re-establishment complete message, a reconfiguration complete message, and a terminal device auxiliary information message.

In the embodiments of the present disclosure, any model mentioned above may be an AI model or an ML model, which is not limited in the embodiments of the present disclosure.

In the embodiments of the present disclosure, any information mentioned above (e.g., one or more of the first information, auxiliary information, first indication information, second indication information, and third indication information) may be carried by one or more of the following message types: an NR Positioning Protocol A (NRPPa) message, a Long Term Evolution Positioning Protocol (LPP) message, a Non-Access Stratum (NAS) message, a Radio Resource Control (RRC) message, a Media Access Control Control Element (MAC CE), Downlink Control Information (DCI), Uplink Control Information (UCI), a Physical Uplink Control Channel (PUCCH), a Physical Uplink Shared Channel (PUSCH), an Inter-node message, an Xn interface message, an F1 interface message, an E1 interface message, an NG interface message, a core network service-based architecture message, or an AI-specific message.

In the embodiments of the present disclosure, any information mentioned above may be carried by one or more of a unicast message, a multicast message, and a broadcast message.

The above unicast message may be understood as information transmitted in a one-to-one manner, that is, a message transmitted by one transmitter to one receiver. In this case, the information source transmits the unicast message through a unicast channel, and only the terminal device or network device allocated with corresponding unicast resource may attempt to receive the unicast message. The unicast message may also be referred to as dedicated signaling.

The above multicast message may be understood as information transmitted in a one-to-many manner, that is, a message transmitted by one transmitter to multiple receivers. In this case, the information source transmits the multicast message through a multicast channel, and the terminal devices or network devices within the coverage of the multicast signal and that are group members may attempt to receive the multicast message. A terminal device or network device may obtain the resource related to the multicast channel when joining a group.

The above broadcast message may be understood as information transmitted in a one-to-any manner, that is, a message transmitted by one transmitter to any receiver. In this case, the information source transmits the broadcast message through a broadcast channel, and any terminal device or network device within the coverage of the broadcast signal may attempt to receive the broadcast message.

The above network device is an access network device, a core network device, an AI/ML model-related information management device, or an Operation Administration and Maintenance (OAM) device. Exemplarily, the access network device is any one of the following: a gNB, a Centralized Unit (CU), a Distributed Unit (DU), a Centralized Unit-Control Plane (CU-CP), or a Centralized Unit-User Plane (CU-UP).

Exemplarily, the core network device is any one of the following: a Location Management Function (LMF) network element, a Network Slice Selection Function (NSSF), an Authentication Server Function (AUSF), a Unified Data Management (UDM), an Access and Mobility Management Function (AMF), a Session Management Function (SMF), a Policy Control Function (PCF), a User Plane Function (UPF), a Sensing Function (SF), or a Network Data Analytics Function (NWDAF) network element.

The method embodiments of the present disclosure are described in detail above with reference to FIGS. 1 to 8, and the apparatus embodiments of the present disclosure are described in detail below with reference to FIGS. 9 to 11. It should be understood that the descriptions of the method embodiments correspond to the descriptions of the apparatus embodiments, and thus, the parts not described in detail may refer to the preceding method embodiments.

FIG. 9 is a schematic diagram of a terminal device according to an embodiment of the present disclosure. The terminal device 900 shown in FIG. 9 includes a transmitting unit 910.

The transmitting unit 910 is configured to transmit first information to a network device, where the first information is used to indicate one or more models, the model description information and/or model data associated with each model in the one or more models meets constraints contained in the auxiliary information provided by the network device, and/or the first information is used to indicate whether the terminal device has model(s) for implementing one or more model functions, and the terminal device determines whether the terminal device has the model(s) for implementing the one or more model functions based on the one or more constraints contained in the auxiliary information provided by the network device.

In some implementations, if the first information is used to indicate whether the terminal device has model(s) for implementing one or more model functions, the terminal device further determines whether the terminal device has the model(s) for implementing the one or more model functions based on the model description information and/or model data associated with each model function in the one or more model functions.

In some implementations, the model description information associated with each model in the one or more models or the model description information associated with each model function in the one or more model functions includes one or more of the following: model function information of each model; type information of input parameters of each model; format information of input parameters of each model; preprocessing rule information of input parameters of each model; type information of output parameters of each model; format information of output parameters of each model; preprocessing rule information of output parameters of each model; application scenario information of each model; deployment location information of each model; capability requirement information for using each model; performance monitoring indicator information of each model; home location information of each model; valid usage range information of each model; generalization characteristic information of each model; version information of each model; precision level information of each model; compilation format information of model data of each model; storage format information of model data of each model; computational complexity information of each model; model complexity information of each model; model size information of each model; geographic area information applicable to each model; logical area information applicable to each model; applicable scenario information of each model; applicable configuration information of each model; applicable dataset information of each model; a second identifier corresponding to each model; and second character string information corresponding to each model.

In some implementations, if the first information is used to indicate whether the terminal device has model(s) for implementing one or more model functions, the first information includes a first bit corresponding to each model function in the one or more model functions, where the first bit is used to indicate whether the terminal device has model(s) for implementing the corresponding model function.

In some implementations, the auxiliary information includes one or more of the following: a geographic area identifier that the model(s) need(s) to satisfy; a logical area identifier that the model(s) need(s) to satisfy; a scenario identifier that the model(s) need(s) to satisfy; configuration information that the model(s) need(s) to satisfy; a dataset identifier that the model(s) need(s) to satisfy; a first identifier, where the first identifier is used to indicate constraints that the model(s) need(s) to satisfy; and a first character string, where the first character string is used to indicate constraints that the model(s) need(s) to satisfy.

In some implementations, if the auxiliary information includes the logical area identifier, the logical area identifier includes one or more of the following: identification information of a Public Land Mobile Network (PLMN); identification information of a Closed Access Group (CAG); identification information of a Standalone Non-Public Network (SNPN); Tracking Area Code (TAC) information; RAN Area Code (RANAC) information; dedicated identification information of a model valid usage area; and cell identification information.

In some implementations, if the auxiliary information includes the scenario identifier, the scenario identifier is used to indicate one or more of the following: indoor hotspot; indoor factory; urban macro station; urban micro station; and rural macro station.

In some implementations, if the auxiliary information includes the configuration information that the model(s) need(s) to satisfy, the configuration information that the model(s) need(s) to satisfy includes measurement configuration information associated with the model(s), and/or public configuration information associated with the model(s).

In some implementations, if the configuration information that the model(s) need(s) to satisfy includes the measurement configuration information associated with the model(s), the measurement configuration information includes one or more of the following: Synchronization Signal/Physical Broadcast Channel block (SSB) resource configuration information; Channel State Information-Reference Signal (CSI-RS) resource configuration information; Sounding Reference Signal (SRS) resource configuration information; and Positioning Reference Signal (PRS) resource configuration information.

In some implementations, if the configuration information that the model(s) need(s) to satisfy includes the public configuration information associated with the model(s), the public configuration information includes one or more of the following: frequency point identification information, frequency band identification information, and frequency band combination identification information.

In some implementations, the terminal device further includes: a first receiving unit, configured to receive the auxiliary information transmitted by the network device.

In some implementations, the terminal device further includes: a second receiving unit, configured to receive first indication information transmitted by the network device, where the first indication information is used to indicate the terminal device to transmit the first information.

In some implementations, the first indication information is carried in one or more of the following: a connection establishment message; a connection resume message; a connection re-establishment message; and message B in a two-step random access procedure.

In some implementations, the auxiliary information is carried in a system broadcast message.

In some implementations, the auxiliary information is carried in one or more of the following: a connection establishment message; a connection resume message; a connection re-establishment message; and message B in a two-step random access procedure.

In some implementations, the first information is carried in one or more of the following: a connection establishment complete message; a connection resume complete message; a connection re-establishment complete message; a first Radio Resource Control (RRC) message, where the first RRC message is a first RRC message transmitted by the terminal device to the network device after successfully receiving contention resolution information in a contention-based random access procedure; a second RRC message, where the second RRC message is a first RRC message transmitted by the terminal device to the network device after entering a connected state.

In some implementations, the auxiliary information is carried in a first reconfiguration message, where the first reconfiguration message is used to reconfigure or update the configuration information of the terminal device, and the first reconfiguration message is generated by a current serving cell of the terminal device or by a handover target cell of the terminal device.

In some implementations, the first information is carried in a reconfiguration complete message associated with the first reconfiguration message.

In some implementations, the auxiliary information is carried in a connected-state dedicated message.

In some implementations, the transmitting unit is configured to: transmit second indication information to the network device, where the second indication information is used to indicate one or more of the following: the terminal device supports one or more models; the terminal device has model information to be transmitted; the model information supported by the terminal device has been updated; and at least one model deployed by the terminal device meets the one or more constraints contained in the auxiliary information.

In some implementations, the transmitting unit is configured to transmit the second indication information to the network device.

In some implementations, the transmitting unit is configured to transmit the second indication information to the network device after the terminal device receives the auxiliary information, where the second indication information is used to indicate that at least one model deployed by the terminal device meets the one or more constraints contained in the auxiliary information.

In some implementations, the terminal device further includes: a third receiving unit, configured to receive third indication information transmitted by the network device, where the third indication information is used to indicate one or more model identifiers of one or more models concerned by the network device; and/or the third indication information is used to indicate the terminal device to transmit the first information.

In some implementations, the third indication information is carried in a connected-state dedicated message.

In some implementations, the second indication information is carried in one or more of the following: a connection establishment complete message, a connection resume complete message, a connection re-establishment complete message, a reconfiguration complete message, and a terminal device auxiliary information message.

FIG. 10 is a schematic diagram of a network device according to an embodiment of the present disclosure. The network device 1000 shown in FIG. 10 includes a receiving unit 1010.

The receiving unit 1010 is configured to receive first information transmitted by a terminal device, where the first information is used to indicate one or more models, the model description information and/or model data associated with each model in the one or more models meets the one or more constraints contained in the auxiliary information provided by the network device, and/or the first information is used to indicate whether the terminal device has model(s) for implementing one or more model functions, and the terminal device determines whether the terminal device has the model(s) for implementing the one or more model functions based on the one or more constraints contained in the auxiliary information provided by the network device.

In some implementations, if the first information is used to indicate whether the terminal device has model(s) for implementing one or more model functions, the terminal device further determines whether the terminal device has the model(s) for implementing the one or more model functions based on the model description information and/or model data associated with each model function in the one or more model functions.

In some implementations, the model description information associated with each model in the one or more models or the model description information associated with each model function in the one or more model functions includes one or more of the following: model function information of each model; type information of input parameters of each model; format information of input parameters of each model; preprocessing rule information of input parameters of each model; type information of output parameters of each model; format information of output parameters of each model; preprocessing rule information of output parameters of each model; application scenario information of each model; deployment location information of each model; capability requirement information for using each model; performance monitoring indicator information of each model; home location information of each model; valid usage range information of each model; generalization characteristic information of each model; version information of each model; precision level information of each model; compilation format information of model data of each model; storage format information of model data of each model; computational complexity information of each model; model complexity information of each model; model size information of each model; geographic area information applicable to each model; logical area information applicable to each model; applicable scenario information of each model; applicable configuration information of each model; applicable dataset information of each model; a second identifier corresponding to each model; and second character string information corresponding to each model.

In some implementations, if the first information is used to indicate whether the terminal device has model(s) for implementing one or more model functions, the first information includes a first bit corresponding to each model function in the one or more model functions, where the first bit is used to indicate whether the terminal device has model(s) for implementing the corresponding model function.

In some implementations, the auxiliary information includes one or more of the following: a geographic area identifier that the model(s) need(s) to satisfy; a logical area identifier that the model(s) need(s) to satisfy; a scenario identifier that the model(s) need(s) to satisfy; configuration information that the model(s) need(s) to satisfy; a dataset identifier that the model(s) need(s) to satisfy; a first identifier, where the first identifier is used to indicate constraints that the model(s) need(s) to satisfy; and a first character string, where the first character string is used to indicate constraints that the model(s) need(s) to satisfy.

In some implementations, if the auxiliary information includes the logical area identifier, the logical area identifier includes one or more of the following: identification information of a Public Land Mobile Network (PLMN); identification information of a Closed Access Group (CAG); identification information of a Standalone Non-Public Network (SNPN); Tracking Area Code (TAC) information; RAN Area Code (RANAC) information; dedicated identification information of a model valid usage area; and cell identification information.

In some implementations, if the auxiliary information includes the scenario identifier, the scenario identifier is used to indicate one or more of the following: indoor hotspot; indoor factory; urban macro station; urban micro station; and rural macro station.

In some implementations, if the auxiliary information includes the configuration information that the model(s) need(s) to satisfy, the configuration information that the model(s) need(s) to satisfy includes measurement configuration information associated with the model(s), and/or public configuration information associated with the model(s).

In some implementations, if the configuration information that the model(s) need(s) to satisfy includes the measurement configuration information associated with the model(s), the measurement configuration information includes one or more of the following: Synchronization Signal/Physical Broadcast Channel block (SSB) resource configuration information; Channel State Information-Reference Signal (CSI-RS) resource configuration information; Sounding Reference Signal (SRS) resource configuration information; and Positioning Reference Signal (PRS) resource configuration information.

In some implementations, if the configuration information that the model(s) need(s) to satisfy includes the public configuration information associated with the model(s), the public configuration information includes one or more of the following: frequency point identification information, frequency band identification information, and frequency band combination identification information.

In some implementations, the network device further includes: a first transmitting unit, configured to transmit the auxiliary information to the terminal device.

In some implementations, the network device further includes: a second transmitting unit, configured to transmit first indication information to the terminal device, where the first indication information is used to indicate the terminal device to transmit the first information.

In some implementations, the first indication information is carried in one or more of the following: a connection establishment message; a connection resume message; a connection re-establishment message; and message B in a two-step random access procedure.

In some implementations, the auxiliary information is carried in a system broadcast message.

In some implementations, the auxiliary information is carried in one or more of the following: a connection establishment message; a connection resume message; a connection re-establishment message; and message B in a two-step random access procedure.

In some implementations, the first information is carried in one or more of the following: a connection establishment complete message; a connection resume complete message; a connection re-establishment complete message; a first Radio Resource Control (RRC) message, where the first RRC message is the first RRC message transmitted by the terminal device to the network device after successfully receiving contention resolution information in a contention-based random access procedure; a second RRC message, where the second RRC message is the first RRC message transmitted by the terminal device to the network device after entering the connected state.

In some implementations, the auxiliary information is carried in a first reconfiguration message, where the first reconfiguration message is used to reconfigure or update the configuration information of the terminal device, and the first reconfiguration message is generated by the current serving cell of the terminal device or by the handover target cell of the terminal device.

In some implementations, the first information is carried in a reconfiguration complete message associated with the first reconfiguration message.

In some implementations, the auxiliary information is carried in a connected-state dedicated message.

In some implementations, the receiving unit is further configured to: receive second indication information transmitted by the terminal device, where the second indication information is used to indicate one or more of the following: the terminal device supports one or more models; the terminal device has model information to be transmitted; the model information supported by the terminal device has been updated; and at least one model deployed by the terminal device meets the one or more constraints contained in the auxiliary information.

In some implementations, the receiving unit is further configured to receive the second indication information transmitted by the terminal device.

In some implementations, the receiving unit is further configured to receive the second indication information transmitted by the terminal device, where the second indication information is used to indicate that at least one model deployed by the terminal device meets the one or more constraints contained in the auxiliary information.

In some implementations, the network device further includes: a third transmitting unit, configured to transmit third indication information to the terminal device, where the third indication information is used to indicate one or more model identifiers of one or more models concerned by the network device; and/or the third indication information is used to indicate the terminal device to transmit the first information.

In some implementations, the third indication information is carried in a connected-state dedicated message.

In some implementations, the second indication information is carried in one or more of the following: a connection establishment complete message, a connection resume complete message, a connection re-establishment complete message, a reconfiguration complete message, and a terminal device auxiliary information message.

In an optional embodiment, the transmitting unit 910 may be a transceiver 1130. The terminal device 900 may further include a processor 1110 and a memory 1120, as specifically shown in FIG. 11.

In an optional embodiment, the receiving unit 1010 may be a transceiver 1130. The network device 1000 may further include a processor 1110 and a memory 1120, as specifically shown in FIG. 11.

FIG. 11 is a schematic structural diagram of a communication apparatus according to an embodiment of the present disclosure. The dashed lines in FIG. 11 indicate that the unit or module is optional. The apparatus 1100 may be configured to implement the methods described in the foregoing method embodiments. The apparatus 1100 may be a chip, a terminal device, or a network device.

The apparatus 1100 may include one or more processors 1110. The processor 1110 may support the apparatus 1100 in implementing the methods described in the foregoing method embodiments. The processor 1110 may be a general-purpose processor or a special-purpose processor. For example, the processor may be a Central Processing Unit (CPU). Alternatively, the processor may be another general-purpose processor, a Digital Signal Processor (DSP), an Application Specific Integrated Circuit (ASIC), a Field Programmable Gate Array (FPGA) or other programmable logic devices, discrete gate or transistor logic devices, discrete hardware components, and the like. A general-purpose processor may be a microprocessor, or the processor may be any conventional processor, or the like.

The apparatus 1100 may further include one or more memories 1120. A program is stored on the memory 1120, and the program may be executed by the processor 1110, so that the processor 1110 performs the methods described in the foregoing method embodiments. The memory 1120 may be independent of the processor 1110 or integrated into the processor 1110.

The apparatus 1100 may further include a transceiver 1130. The processor 1110 may communicate with other devices or chips through the transceiver 1130. For example, the processor 1110 may transmit and receive data with other devices or chips through the transceiver 1130.

Embodiments of the present disclosure further provide a computer-readable storage medium for storing a program. The computer-readable storage medium may be applied to the terminal device or the network device provided in the embodiments of the present disclosure, and the program causes a computer to execute the methods performed by the terminal device or the network device in the various embodiments of the present disclosure.

Embodiments of the present disclosure further provide a computer program product. The computer program product includes a program. The computer program product may be applied to the terminal device or the network device provided in the embodiments of the present disclosure, and the program causes a computer to execute the methods performed by the terminal device or the network device in the various embodiments of the present disclosure.

Embodiments of the present disclosure further provide a computer program. The computer program may be applied to the terminal device or the network device provided in the embodiments of the present disclosure, and the computer program causes a computer to execute the methods performed by the terminal device or the network device in the various embodiments of the present disclosure.

It should be understood that the terms "system" and "network" in the present disclosure may be used interchangeably. In addition, the terms used in the present disclosure are only for explaining specific embodiments of the present disclosure, and are not intended to limit the present disclosure. The terms "first", "second", "third", "fourth" and the like in the specification and claims of the present disclosure and the accompanying drawings are used to distinguish different objects, rather than to describe a specific order. Furthermore, the terms "comprise", "include" and any variations thereof are intended to cover non-exclusive inclusion.

In the embodiments of the present disclosure, the mentioned "indication" may be direct indication, indirect indication, or indication of an association relationship. For example, A indicates B may mean that A directly indicates B (e.g., B may be obtained through A); it may also mean that A indirectly indicates B (e.g., A indicates C, and B may be obtained through C); it may also mean that there is an association relationship between A and B.

In the embodiments of the present disclosure, "B corresponding to A" means that B is associated with A, and B may be determined according to A. However, it should also be understood that determining B according to A does not mean that B is determined only according to A, and B may also be determined according to A and/or other information.

In the embodiments of the present disclosure, the term "corresponding" may indicate a direct or indirect correspondence relationship between two parties, an association relationship between two parties, or a relationship such as indication and being indicated, configuration and being configured, etc.

In the embodiments of the present disclosure, "predefined" or "preconfigured" may be implemented by pre-storing corresponding codes, tables, or other means usable for indicating relevant information in a device (e.g., including a terminal device and a network device), and the specific implementation manner thereof is not limited in the present disclosure. For example, predefined may refer to defined in a protocol.

In the embodiments of the present disclosure, the "protocol" may refer to a standard protocol in the communication field. For example, the "protocol" may include the LTE protocol, the NR protocol, and related protocols applied to future communication systems, which is not limited in the present disclosure.

The term "and/or" in the embodiments of the present disclosure is merely an association relationship describing associated objects, indicating that three relationships may exist. For example, A and/or B may indicate three cases: A exists alone, both A and B exist, and B exists alone. In addition, the character "/" in this document generally indicates that the associated objects before and after are in an "or" relationship.

In various embodiments of the present disclosure, the sequence numbers of the processes above do not mean the order of execution. The order of execution of each process should be determined by its function and internal logic, and should not constitute any limitation on the implementation process of the embodiments of the present disclosure.

In the several embodiments provided in the present disclosure, it should be understood that the disclosed system, apparatus, and method may be implemented in other manners. For example, the apparatus embodiments described above are merely illustrative. For example, the division of the units is only a logical function division, and there may be other division manners in actual implementation. For example, multiple units or components may be combined or integrated into another system, or some features may be ignored or not executed. In addition, the displayed or discussed mutual coupling or direct coupling or communication connection may be implemented through some interfaces, and the indirect coupling or communication connection between the devices or units may be in an electrical, mechanical, or other form.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the embodiments.

In addition, each functional unit in each embodiment of the present disclosure may be integrated into one processing unit, or each unit may exist alone physically, or two or more units may be integrated into one unit.

In the above embodiments, all or part of the implementation may be realized by software, hardware, firmware, or any combination thereof. When implemented by software, it may be realized in the form of a computer program product in whole or in part. The computer program product includes one or more computer instructions. When the computer program instructions are loaded and executed on a computer, the processes or functions according to the embodiments of the present disclosure are generated in whole or in part. The computer may be a general-purpose computer, a special-purpose computer, a computer network, or other programmable devices. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (e.g., coaxial cable, optical fiber, Digital Subscriber Line (DSL)) or wireless (e.g., infrared, wireless, microwave, etc.) manner. The computer-readable storage medium may be any available medium that can be accessed by a computer, or a data storage device such as a server or a data center integrating one or more available media. The available medium may be a magnetic medium (e.g., a floppy disk, a hard disk, a magnetic tape), an optical medium (e.g., a Digital Versatile Disc (DVD)), or a semiconductor medium (e.g., a Solid State Disk (SSD)), etc.

The above are only specific implementation manners of the present disclosure, but the protection scope of the present disclosure is not limited thereto. Any person skilled in the art can easily think of changes or substitutions within the technical scope disclosed in the present disclosure, which should be covered within the protection scope of the present disclosure. Therefore, the protection scope of the present disclosure shall be subject to the protection scope of the claims..

## Claims

1. A method for wireless communication, comprising:
transmitting, by a terminal device, first information to a network device,
wherein the first information is used to indicate one or more models, model description information and/or model data associated with each of the one or more models satisfies one or more constraints contained in auxiliary information provided by the network device; and/or
wherein the first information is used to indicate whether the terminal device has model(s) for implementing one or more model functions, and the terminal device determines whether the terminal device has the model(s) for implementing the one or more model functions based on the one or more constraints contained in the auxiliary information provided by the network device.

2. The method according to claim 1, wherein if the first information is used to indicate whether the terminal device has model(s) for implementing one or more model functions, the terminal device further determines whether the terminal device has the model(s) for implementing the one or more model functions based on the model description information and/or model data associated with each of the one or more model functions.

3. The method according to claim 1 or 2, wherein the model description information associated with each of the one or more models or the model description information associated with each of the one or more model functions comprises one or more of the following:
type information of input parameters of each model;
format information of input parameters of each model;
preprocessing rule information of input parameters of each model;
type information of output parameters of each model;
format information of output parameters of each model;
preprocessing rule information of output parameters of each model;
model function information of each model;
application scenario information of each model;
deployment location information of each model;
capability requirement information for using each model;
performance monitoring indicator information of each model;
home location information of each model;
generalization characteristic information of each model;
version information of each model;
precision level information of each model;
compilation format information of model data of each model;
storage format information of model data of each model;
computational complexity information of each model;
model complexity information of each model;
model size information of each model;
geographic area information applicable to each model;
logical area information applicable to each model;
applicable scenario information of each model;
applicable configuration information of each model;
applicable dataset information of each model;
a second identifier corresponding to each model; and
second character string information corresponding to each model.

4. The method according to any one of claims 1 to 3, wherein if the first information is used to indicate whether the terminal device has the model(s) for implementing one or more model functions, the first information includes a first bit corresponding to each of the one or more model functions, and the first bit is used to indicate whether the terminal device has model(s) for implementing the corresponding model function.

5. The method according to any one of claims 1 to 4, wherein the auxiliary information comprises one or more of the following:
a geographic area identifier that the model(s) need(s) to satisfy;
a logical area identifier that the model(s) need(s) to satisfy;
a scenario identifier that the model(s) need(s) to satisfy;
configuration information that the model(s) need(s) to satisfy;
a dataset identifier that the model(s) need(s) to satisfy;
a first identifier, the first identifier being used to indicate a constraint that the model(s) need(s) to satisfy; and
a first character string, the first character string being used to indicate a constraint that the model(s) need(s) to satisfy.

6. The method according to claim 5, wherein if the auxiliary information includes the logical area identifier, the logical area identifier comprises one or more of the following: identification information of a Public Land Mobile Network (PLMN); identification information of a Closed Access Group (CAG); identification information of a Standalone Non-Public Network (SNPN); Tracking Area Code (TAC) information; RAN Area Code (RANAC) information; dedicated identification information of a model valid usage area; and cell identification information.

7. The method according to claim 5 or 6, wherein if the auxiliary information comprises the scenario identifier, the scenario identifier is used to indicate one or more of the following: indoor hotspot; indoor factory; urban macro station; urban micro station; and rural macro station.

8. The method according to any one of claims 5 to 7, wherein if the auxiliary information comprises the configuration information that the model(s) need(s) to satisfy, the configuration information that the model(s) need(s) to satisfy comprises measurement configuration information associated with the model(s), and/or public configuration information associated with the model(s).

9. The method according to claim 8, wherein if the configuration information that the model(s) need(s) to satisfy comprises the measurement configuration information associated with the model(s), the measurement configuration information comprises one or more of the following: Synchronization Signal/Physical Broadcast Channel block (SSB) resource configuration information; Channel State Information-Reference Signal (CSI-RS) resource configuration information; Sounding Reference Signal (SRS) resource configuration information; and Positioning Reference Signal (PRS) resource configuration information.

10. The method according to claim 8 or 9, wherein if the configuration information that the model(s) need(s) to satisfy comprises the public configuration information associated with the model(s), the public configuration information comprises one or more of the following: frequency identification information, frequency band identification information, and frequency band combination identification information.

11. The method according to any one of claims 1 to 10, further comprising:
receiving, by the terminal device, the auxiliary information transmitted by the network device.

12. The method according to any one of claims 1 to 11, further comprising:
receiving, by the terminal device, first indication information transmitted by the network device, the first indication information being used to indicate the terminal device to transmit the first information.

13. The method according to claim 12, wherein the first indication information is carried in one or more of the following: a connection establishment message; a connection resume message; a connection re-establishment message; and message B in a two-step random access procedure.

14. The method according to any one of claims 1 to 13, wherein the auxiliary information is carried in a system broadcast message.

15. The method according to any one of claims 1 to 11, wherein the auxiliary information is carried in one or more of the following: a connection establishment message; a connection resume message; a connection re-establishment message; and message B in a two-step random access procedure.

16. The method according to any one of claims 1 to 15, wherein the first information is carried in one or more of the following:
a connection establishment complete message;
a connection resume complete message;
a connection re-establishment complete message;
a first Radio Resource Control (RRC) message, the first RRC message being a first RRC message transmitted by the terminal device to the network device after successfully receiving contention resolution information in a contention-based random access procedure; and
a second RRC message, the second RRC message being a first RRC message transmitted by the terminal device to the network device after entering a connected state.

17. The method according to any one of claims 1 to 11, wherein the auxiliary information is carried in a first reconfiguration message, the first reconfiguration message being used to reconfigure or update configuration information of the terminal device, and the first reconfiguration message is generated by a current serving cell of the terminal device or by a handover target cell of the terminal device.

18. The method according to claim 17, wherein the first information is carried in a reconfiguration complete message associated with the first reconfiguration message.

19. The method according to any one of claims 1 to 11, wherein the auxiliary information is carried in a connected-state dedicated message.

20. The method according to claim 19, further comprising:
transmitting, by the terminal device, second indication information to the network device, the second indication information being used to indicate one or more of the following:
the terminal device supports one or more models;
the terminal device has model information to be transmitted;
the model information supported by the terminal device has been updated; and
at least one model deployed by the terminal device satisfies the one or more constraints contained in the auxiliary information.

21. The method according to claim 20, wherein transmitting, by the terminal device, the second indication information to the network device comprises:
before the terminal device receives the auxiliary information, transmitting, by the terminal device, the second indication information to the network device.

22. The method according to claim 20, wherein transmitting, by the terminal device, the second indication information to the network device, comprises:
after the terminal device receives the auxiliary information, transmitting, by the terminal device, the second indication information to the network device, the second indication information being used to indicate that at least one model deployed by the terminal device satisfies the one or more constraints contained in the auxiliary information.

23. The method according to claim 22, further comprising:
receiving, by terminal device, third indication information transmitted by the network device, wherein
the third indication information is used to indicate one or more model identifiers of one or more models concerned by the network device; and/or
the third indication information is used to indicate the terminal device to transmit the first information.

24. The method according to claim 23, wherein the third indication information is carried in a connected-state dedicated message.

25. The method according to any one of claims 20 to 24, wherein the second indication information is carried in one or more of the following: a connection establishment complete message, a connection resume complete message, a connection re-establishment complete message, a reconfiguration complete message, and a terminal device auxiliary information message.

26. A method for wireless communication, comprising:
receiving, by a network device, first information transmitted by a terminal device,
wherein the first information is used to indicate one or more models, model description information and/or model data associated with each of the one or more models satisfies one or more constraints contained in the auxiliary information provided by the network device; and/or
the first information is used to indicate whether the terminal device has model(s) for implementing one or more model functions, and the terminal device determines whether the terminal device has the model(s) for implementing the one or more model functions based on the one or more constraints contained in the auxiliary information provided by the network device.

27. The method according to claim 26, wherein if the first information is used to indicate whether the terminal device has the model(s) for implementing one or more model functions, the terminal device further determines whether the terminal device has the model(s) for implementing the one or more model functions based on the model description information and/or model data associated with each of the one or more model functions.

28. The method according to claim 26 or 27, wherein the model description information associated with each of the one or more models or the model description information associated with each of the one or more model functions comprises one or more of the following:
type information of input parameters of each model;
format information of input parameters of each model;
preprocessing rule information of input parameters of each model;
type information of output parameters of each model;
format information of output parameters of each model;
preprocessing rule information of output parameters of each model;
model function information of each model;
application scenario information of each model;
deployment location information of each model;
capability requirement information for using each model;
performance monitoring indicator information of each model;
home location information of each model;
generalization characteristic information of each model;
version information of each model;
precision level information of each model;
compilation format information of model data of each model;
storage format information of model data of each model;
computational complexity information of each model;
model complexity information of each model;
model size information of each model;
geographic area information applicable to each model;
logical area information applicable to each model;
applicable scenario information of each model;
applicable configuration information of each model;
applicable dataset information of each model;
a second identifier corresponding to each model; and
second character string information corresponding to each model.

29. The method according to any one of claims 26 to 28, wherein if the first information is used to indicate whether the terminal device has the model(s) for implementing one or more model functions, the first information comprises a first bit corresponding to each of the one or more model functions, and the first bit is used to indicate whether the terminal device has model(s) for implementing the corresponding model function.

30. The method according to any one of claims 26 to 29, wherein the auxiliary information comprises one or more of the following:
a geographic area identifier that the model(s) need(s) to satisfy;
a logical area identifier that the model(s) need(s) to satisfy;
a scenario identifier that the model(s) need(s) to satisfy;
configuration information that the model(s) need(s) to satisfy;
a dataset identifier that the model(s) need(s) to satisfy;
a first identifier, the first identifier being used to indicate a constraint that the model(s) need(s) to satisfy; and
a first character string, the first character string being used to indicate a constraint that the model(s) need(s) to satisfy.

31. The method according to claim 30, wherein if the auxiliary information comprises the logical area identifier, the logical area identifier comprises one or more of the following: identification information of a Public Land Mobile Network (PLMN); identification information of a Closed Access Group (CAG); identification information of a Standalone Non-Public Network (SNPN); Tracking Area Code (TAC) information; RAN Area Code (RANAC) information; dedicated identification information of a model valid usage area; and cell identification information.

32. The method according to claim 30 or 31, wherein if the auxiliary information comprises the scenario identifier, the scenario identifier is used to indicate one or more of the following: indoor hotspot; indoor factory; urban macro station; urban micro station; and rural macro station.

33. The method according to any one of claims 30 to 32, wherein if the auxiliary information comprises the configuration information that the model(s) need(s) to satisfy, the configuration information that the model(s) need(s) to satisfy comprises measurement configuration information associated with the model(s), and/or public configuration information associated with the model(s).

34. The method according to claim 33, wherein if the configuration information that the model(s) need(s) to satisfy comprises the measurement configuration information associated with the model(s), the measurement configuration information comprises one or more of the following:
synchronization Signal/Physical Broadcast Channel block (SSB) resource configuration information; Channel State Information-Reference Signal (CSI-RS) resource configuration information; Sounding Reference Signal (SRS) resource configuration information; and Positioning Reference Signal (PRS) resource configuration information.

35. The method according to claim 33 or 34, wherein if the configuration information that the model(s) need(s) to satisfy comprises the public configuration information associated with the model(s), the public configuration information comprises one or more of the following: frequency identification information, frequency band identification information, and frequency band combination identification information.

36. The method according to any one of claims 26 to 35, further comprising:
transmitting, by the network device, the auxiliary information to the terminal device.

37. The method according to any one of claims 26 to 36, further comprising:
transmitting, by the network device, first indication information to the terminal device, the first indication information being used to indicate the terminal device to transmit the first information.

38. The method according to claim 37, wherein the first indication information is carried in one or more of the following: a connection establishment message; a connection resume message; a connection re-establishment message; and message B in a two-step random access procedure.

39. The method according to any one of claims 26 to 38, wherein the auxiliary information is carried in a system broadcast message.

40. The method according to any one of claims 26 to 36, wherein the auxiliary information is carried in one or more of the following: a connection establishment message; a connection resume message; a connection re-establishment message; and message B in a two-step random access procedure.

41. The method according to any one of claims 26 to 40, wherein the first information is carried in one or more of the following:
a connection establishment complete message;
a connection resume complete message;
a connection re-establishment complete message;
a first Radio Resource Control (RRC) message, the first RRC message being a first RRC message transmitted by the terminal device to the network device after successfully receiving contention resolution information in a contention-based random access procedure; and
a second RRC message, the second RRC message being a first RRC message transmitted by the terminal device to the network device after entering a connected state.

42. The method according to any one of claims 26 to 36, wherein the auxiliary information is carried in a first reconfiguration message, the first reconfiguration message being used to reconfigure or update configuration information of the terminal device, and the first reconfiguration message is generated by a current serving cell of the terminal device or by a handover target cell of the terminal device.

43. The method according to claim 42, wherein the first information is carried in a reconfiguration complete message associated with the first reconfiguration message.

44. The method according to any one of claims 26 to 36, wherein the auxiliary information is carried in a connected-state dedicated message.

45. The method according to claim 44, further comprising:
receiving, by the network device, second indication information transmitted by the terminal device, the second indication information being used to indicate one or more of the following:
the terminal device supports one or more models;
the terminal device has model information to be transmitted;
the model information supported by the terminal device has been updated; and
at least one model deployed by the terminal device satisfies the one or more constraints contained in the auxiliary information.

46. The method according to claim 45, wherein receiving, by the network device, the second indication information transmitted by the terminal device comprises:
before transmitting the auxiliary information, the network device receives the second indication information transmitted by the terminal device.

47. The method according to claim 45, wherein receiving, by the network device, the second indication information transmitted by the terminal device comprises:
after transmitting the auxiliary information, receiving, by the network device, the second indication information transmitted by the terminal device, the second indication information being used to indicate that at least one model deployed by the terminal device satisfies the one or more constraints contained in the auxiliary information.

48. The method according to claim 47, further comprising:
transmitting, by the network device, third indication information to the terminal device, the third indication information being used to indicate one or more model identifiers of one or more models concerned by the network device; and/or
the third indication information being used to indicate the terminal device to transmit the first information.

49. The method according to claim 48, wherein the third indication information is carried in a connected-state dedicated message.

50. The method according to any one of claims 45 to 49, wherein the second indication information is carried in one or more of the following: a connection establishment complete message, a connection resume complete message, a connection re-establishment complete message, a reconfiguration complete message, and a terminal device auxiliary information message.

51. A terminal device, comprising:
a transmitting unit configured to transmit first information to a network device,
wherein the first information is used to indicate one or more models, model description information and/or model data associated with each of the one or more models satisfies constraints contained in auxiliary information provided by the network device; and/or
wherein the first information is used to indicate whether the terminal device has model(s) for implementing one or more model functions, and the terminal device determines whether the terminal device has the model(s) for implementing the one or more model functions based on the one or more constraints contained in the auxiliary information provided by the network device.

52. The terminal device according to claim 51, wherein if the first information is used to indicate whether the terminal device has the model(s) for implementing one or more model functions, the terminal device further determines whether the terminal device has the model(s) for implementing the one or more model functions based on the model description information and/or model data associated with each of the one or more model functions.

53. The terminal device according to claim 51 or 52, wherein the model description information associated with each of the one or more models or the model description information associated with each of the one or more model functions comprises one or more of the following:
type information of input parameters of each model;
format information of input parameters of each model;
preprocessing rule information of input parameters of each model;
type information of output parameters of each model;
format information of output parameters of each model;
preprocessing rule information of output parameters of each model;
model function information of each model;
application scenario information of each model;
deployment location information of each model;
capability requirement information for using each model;
performance monitoring indicator information of each model;
home location information of each model;
generalization characteristic information of each model;
version information of each model;
precision level information of each model;
compilation format information of model data of each model;
storage format information of model data of each model;
computational complexity information of each model;
model complexity information of each model;
model size information of each model;
geographic area information applicable to each model;
logical area information applicable to each model;
applicable scenario information of each model;
applicable configuration information of each model;
applicable dataset information of each model;
a second identifier corresponding to each model; and
second character string information corresponding to each model.

54. The terminal device according to any one of claims 51 to 53, wherein if the first information is used to indicate whether the terminal device has the model(s) for implementing one or more model functions, the first information includes a first bit corresponding to each of the one or more model functions, and the first bit is used to indicate whether the terminal device has model(s) for implementing the corresponding model function.

55. The terminal device according to any one of claims 51 to 54, wherein the auxiliary information comprises one or more of the following:
a geographic area identifier that the model(s) need(s) to satisfy;
a logical area identifier that the model(s) need(s) to satisfy;
a scenario identifier that the model(s) need(s) to satisfy;
configuration information that the model(s) need(s) to satisfy;
a dataset identifier that the model(s) need(s) to satisfy;
a first identifier, the first identifier being used to indicate a constraint that the model(s) need(s) to satisfy; and
a first character string, the first character string being used to indicate a constraint that the model(s) need(s) to satisfy.

56. The terminal device according to claim 55, wherein if the auxiliary information comprises the logical area identifier, the logical area identifier comprises one or more of the following: identification information of a Public Land Mobile Network (PLMN); identification information of a Closed Access Group (CAG); identification information of a Standalone Non-Public Network (SNPN); Tracking Area Code (TAC) information; RAN Area Code (RANAC) information; dedicated identification information of a model valid usage area; and cell identification information.

57. The terminal device according to claim 55 or 56, wherein if the auxiliary information comprises the scenario identifier, the scenario identifier is used to indicate one or more of the following: indoor hotspot; indoor factory; urban macro station; urban micro station; and rural macro station.

58. The terminal device according to any one of claims 55 to 57, wherein if the auxiliary information comprises the configuration information that the model(s) need(s) to satisfy, the configuration information that the model(s) need(s) to satisfy comprises measurement configuration information associated with the model(s), and/or public configuration information associated with the model(s).

59. The terminal device according to claim 58, wherein if the configuration information that the model(s) need(s) to satisfy comprises the measurement configuration information associated with the model(s), the measurement configuration information comprises one or more of the following: Synchronization Signal/Physical Broadcast Channel block (SSB) resource configuration information; Channel State Information-Reference Signal (CSI-RS) resource configuration information; Sounding Reference Signal (SRS) resource configuration information; and Positioning Reference Signal (PRS) resource configuration information.

60. The terminal device according to claim 58 or 59, wherein if the configuration information that the model(s) need(s) to satisfy comprises the public configuration information associated with the model(s), the public configuration information comprises one or more of the following: frequency point identification information, frequency band identification information, and frequency band combination identification information.

61. The terminal device according to any one of claims 51 to 60, further comprising:
a first receiving unit configured to receive the auxiliary information transmitted by the network device.

62. The terminal device according to any one of claims 51 to 61, further comprising:
a second receiving unit configured to receive first indication information transmitted by the network device, the first indication information being used to indicate the terminal device to transmit the first information.

63. The terminal device according to claim 62, wherein the first indication information is carried in one or more of the following: a connection establishment message; a connection resume message; a connection re-establishment message; and mssage B in a two-step random access procedure.

64. The terminal device according to any one of claims 51 to 63, wherein the auxiliary information is carried in a system broadcast message.

65. The terminal device according to any one of claims 51 to 61, wherein the auxiliary information is carried in one or more of the following: a connection establishment message; a connection resume message; a connection re-establishment message; and message B in a two-step random access procedure.

66. The terminal device according to any one of claims 51 to 65, wherein the first information is carried in one or more of the following:
a connection establishment complete message;
a connection resume complete message;
a connection re-establishment complete message;
a first Radio Resource Control (RRC) message, the first RRC message being a first RRC message transmitted by the terminal device to the network device after successfully receiving contention resolution information in a contention-based random access procedure; and
a second RRC message, the second RRC message being a first RRC message transmitted by the terminal device to the network device after entering a connected state.

67. The terminal device according to any one of claims 51 to 61, wherein the auxiliary information is carried in a first reconfiguration message, the first reconfiguration message being used to reconfigure or update configuration information of the terminal device, and the first reconfiguration message is generated by a current serving cell of the terminal device or by a handover target cell of the terminal device.

68. The terminal device according to claim 67, wherein the first information is carried in a reconfiguration complete message associated with the first reconfiguration message.

69. The terminal device according to any one of claims 51 to 61, wherein the auxiliary information is carried in a connected-state dedicated message.

70. The terminal device according to claim 69, wherein the transmitting unit is further configured to:
transmit second indication information to the network device, the second indication information being used to indicate one or more of the following:
the terminal device supports one or more models;
the terminal device has model information to be transmitted;
the model information supported by the terminal device has been updated; and
at least one model deployed by the terminal device satisfies the one or more constraints contained in the auxiliary information.

71. The terminal device according to claim 70, wherein the transmitting unit is configured to transmit the second indication information to the network device before the terminal device receives the auxiliary information.

72. The terminal device according to claim 70, wherein the transmitting unit is configured to transmit the second indication information to the network device after the terminal device receives the auxiliary information, the second indication information being used to indicate that at least one model deployed by the terminal device satisfies the one or more constraints contained in the auxiliary information.

73. The terminal device according to claim 72, further comprising:
a third receiving unit configured to receive third indication information transmitted by the network device, the third indication information being used to indicate one or more model identifiers of one or more models concerned by the network device; and/or
the third indication information being used to indicate the terminal device to transmit the first information.

74. The terminal device according to claim 73, wherein the third indication information is carried in a connected-state dedicated message.

75. The terminal device according to any one of claims 70 to 74, wherein the second indication information is carried in one or more of the following: a connection establishment complete message, a connection resume complete message, a connection re-establishment complete message, a reconfiguration complete message, and a terminal device auxiliary information message.

76. A network device, comprising:
a receiving unit configured to receive first information transmitted by a terminal device, wherein
the first information is used to indicate one or more models, model description information and/or model data associated with each of the one or more models satisfies constraints contained in the auxiliary information provided by the network device; and/or
the first information is used to indicate whether the terminal device has model(s) for implementing one or more model functions, and the terminal device determines whether the terminal device has the model(s) for implementing the one or more model functions based on the one or more constraints contained in the auxiliary information provided by the network device.

77. The network device according to claim 76, wherein if the first information is used to indicate whether the terminal device has model(s) for implementing one or more model functions, the terminal device further determines whether the terminal device has the model(s) for implementing the one or more model functions based on the model description information and/or model data associated with each of the one or more model functions.

78. The network device according to claim 76 or 77, wherein the model description information associated with each of the one or more models or the model description information associated with each of the one or more model functions comprises one or more of the following:
type information of input parameters of each model;
format information of input parameters of each model;
preprocessing rule information of input parameters of each model;
type information of output parameters of each model;
format information of output parameters of each model;
preprocessing rule information of output parameters of each model;
model function information of each model;
application scenario information of each model;
deployment location information of each model;
capability requirement information for using each model;
performance monitoring indicator information of each model;
home location information of each model;
generalization characteristic information of each model;
version information of each model;
precision level information of each model;
compilation format information of model data of each model;
storage format information of model data of each model;
computational complexity information of each model;
model complexity information of each model;
model size information of each model;
geographic area information applicable to each model;
logical area information applicable to each model;
applicable scenario information of each model;
applicable configuration information of each model;
applicable dataset information of each model;
a second identifier corresponding to each model; and
second character string information corresponding to each model.

79. The network device according to any one of claims 76 to 78, wherein if the first information is used to indicate whether the terminal device has the model(s) for implementing one or more model functions, the first information comprises a first bit corresponding to each of the one or more model functions, and the first bit is used to indicate whether the terminal device has model(s) for implementing the corresponding model function.

80. The network device according to any one of claims 76 to 79, wherein the auxiliary information comprises one or more of the following:
a geographic area identifier that the model(s) need(s) to satisfy;
a logical area identifier that the model(s) need(s) to satisfy;
a scenario identifier that the model(s) need(s) to satisfy;
configuration information that the model(s) need(s) to satisfy;
a dataset identifier that the model(s) need(s) to satisfy;
a first identifier, the first identifier being used to indicate a constraint that the model(s) need(s) to satisfy; and
a first character string, the first character string being used to indicate a constraint that the model(s) need(s) to satisfy.

81. The network device according to claim 80, wherein if the auxiliary information comprises the logical area identifier, the logical area identifier comprises one or more of the following:
identification information of a Public Land Mobile Network (PLMN); identification information of a Closed Access Group (CAG); identification information of a Standalone Non-Public Network (SNPN); Tracking Area Code (TAC) information; RAN Area Code (RANAC) information; dedicated identification information of a model valid usage area; and cell identification information.

82. The network device according to claim 80 or 81, wherein if the auxiliary information comprises the scenario identifier, the scenario identifier is used to indicate one or more of the following: indoor hotspot; indoor factory; urban macro station; urban micro station; and rural macro station.

83. The network device according to any one of claims 80 to 82, wherein if the auxiliary information comprises the configuration information that the model(s) need(s) to satisfy, the configuration information that the model(s) need(s) to satisfy comprises measurement configuration information associated with the model(s), and/or public configuration information associated with the model(s).

84. The network device according to claim 83, wherein if the configuration information that the model(s) need(s) to satisfy comprises the measurement configuration information associated with the model(s), the measurement configuration information comprises one or more of the following: Synchronization Signal/Physical Broadcast Channel block (SSB) resource configuration information; Channel State Information-Reference Signal (CSI-RS) resource configuration information; Sounding Reference Signal (SRS) resource configuration information; and Positioning Reference Signal (PRS) resource configuration information.

85. The network device according to claim 83 or 84, wherein if the configuration information that the model(s) need(s) to satisfy comprises the public configuration information associated with the model(s), the public configuration information comprises one or more of the following: frequency point identification information, frequency band identification information, and frequency band combination identification information.

86. The network device according to any one of claims 76 to 85, further comprising:
a first transmitting unit configured to transmit the auxiliary information to the terminal device.

87. The network device according to any one of claims 76 to 86, further comprising:
a second transmitting unit configured to transmit first indication information to the terminal device, the first indication information being used to indicate the terminal device to transmit the first information.

88. The network device according to claim 87, wherein the first indication information is carried in one or more of the following: a connection establishment message; a connection recovery message; a connection re-establishment message; and message B in a two-step random access procedure.

89. The network device according to any one of claims 76 to 88, wherein the auxiliary information is carried in a system broadcast message.

90. The network device according to any one of claims 76 to 86, wherein the auxiliary information is carried in one or more of the following: a connection establishment message; a connection resume message; a connection re-establishment message; and message B in a two-step random access procedure.

91. The network device according to any one of claims 76 to 90, wherein the first information is carried in one or more of the following:
a connection establishment complete message;
a connection resume complete message;
a connection re-establishment complete message;
a first Radio Resource Control (RRC) message, the first RRC message being a first RRC message transmitted by the terminal device to the network device after successfully receiving contention resolution information in a contention-based random access procedure; and
a second RRC message, the second RRC message being a first RRC message transmitted by the terminal device to the network device after entering a connected state.

92. The network device according to any one of claims 76 to 86, wherein the auxiliary information is carried in a first reconfiguration message, the first reconfiguration message being used to reconfigure or update configuration information of the terminal device, and the first reconfiguration message is generated by a current serving cell of the terminal device or by a handover target cell of the terminal device.

93. The network device according to claim 92, wherein the first information is carried in a reconfiguration complete message associated with the first reconfiguration message.

94. The network device according to any one of claims 76 to 86, wherein the auxiliary information is carried in a connected-state dedicated message.

95. The network device according to claim 94, wherein the receiving unit is further configured to:
receive second indication information transmitted by the terminal device, the second indication information being used to indicate one or more of the following:
the terminal device supports one or more models;
the terminal device has model information to be transmitted;
the model information supported by the terminal device has been updated; and
at least one model deployed by the terminal device satisfies the one or more constraints contained in the auxiliary information.

96. The network device according to claim 95, wherein the receiving unit is configured to receive the second indication information transmitted by the terminal device before the network device transmits the auxiliary information.

97. The network device according to claim 95, wherein the receiving unit is configured to receive the second indication information transmitted by the terminal device after the network device transmits the auxiliary information, the second indication information being used to indicate that at least one model deployed by the terminal device satisfies the one or more constraints contained in the auxiliary information.

98. The network device according to claim 97, further comprising:
a third transmitting unit configured to transmit third indication information to the terminal device, the third indication information being used to indicate one or more model identifiers of one or more models concerned by the network device; and/or
the third indication information being used to indicate the terminal device to transmit the first information.

99. The network device according to claim 98, wherein the third indication information is carried in a connected-state dedicated message.

100. The network device according to any one of claims 95 to 99, wherein the second indication information is carried in one or more of the following: a connection establishment complete message, a connection resume complete message, a connection re-establishment complete message, a reconfiguration complete message, and a terminal device auxiliary information message.

101. A terminal device, comprising a transceiver, a memory, and a processor, the memory being configured to store a program, the processor being configured to invoke the program in the memory and control the transceiver to receive or transmit signals, so that the terminal device performs the method according to any one of claims 1 to 25.

102. A network device, comprising a transceiver, a memory, and a processor, the memory being configured to store a program, the processor being configured to invoke the program in the memory and control the transceiver to receive or transmit signals, so that the network device performs the method according to any one of claims 26 to 50.

103. An apparatus, comprising a processor configured to invoke a program from a memory, so that the apparatus performs the method according to any one of claims 1 to 50.

104. A chip, comprising a processor configured to invoke a program from a memory, so that a device installed with the chip performs the method according to any one of claims 1 to 50.

105. A computer-readable storage medium having a program stored thereon, the program causing a computer to perform the method according to any one of claims 1 to 50.

106. A computer program product, comprising a program, the program causing a computer to perform the method according to any one of claims 1 to 50.

107. A computer program, the computer program causing a computer to perform the method according to any one of claims 1 to 50.
